# EUROPÄISCHE PATENTSCHRIFT

(11) **EP 4 384 355 B1**
(45) Veröffentlichungstag und Bekanntmachung des Hinweises auf die Patenterteilung: **03.09.2025**
(21) Anmeldenummer: 22764767.4
(22) Anmeldetag: 12.08.2022
(51) Int. Cl.: B25J 9/00

(54) **EXOSKELETT UND VERFAHREN**
EXOSKELETON AND METHOD
EXOSQUELETTE ET PROCÉDÉ

(30) Priorität: 13.08.2021 DE 102021208909
(43) Veröffentlichungstag der Anmeldung: 19.06.2024
(60) Teilanmeldung: 25186705.7
(73) Patentinhaber: Festool GmbH, 73240 Wendlingen (DE)
(72) Erfinder: HAMMER, Jan, 89275 Elchingen (DE); ARGUBI-WOLLESEN, Andreas, 20146 Hamburg (DE); OTTEN, Bernward, 20099 Hamburg (DE); WEIDNER, Dr. Robert, 29581 Bohlsen (DE); FETHKE, Mauritz, 22111 Hamburg (DE); HOLSTEN-STUEHMER, Esther, 20355 Hamburg (DE)
(74) Vertreter: Patentanwälte Magenbauer & Kollegen Partnerschaft mbB
(86) Internationale Anmeldenummer: PCT/EP2022/072718
(87) Internationale Veröffentlichungsnummer: WO 2023/017175

(56) Entgegenhaltungen:
- EP-A1- 3 278 938
- DE-A1- 102018 112 558
- KR-A- 20180 087 298

## Beschreibung

Die Erfindung betrifft ein Exoskelett, umfassend: einen Basisabschnitt zur Anbringung an einen Körperabschnitt, insbesondere den Torso und/oder Extremitäten, des menschlichen Körpers, einen beweglich mit dem Basisabschnitt gekoppelten Unterstützungsabschnitt zur Unterstützung eines Körperteils, vorzugsweise einer Gliedmaße, insbesondere eines Arms, des menschlichen Körpers und eine auf den Unterstützungsabschnitt wirkende, insbesondere pneumatische, elektrische und/oder mechanische, Aktoreinrichtung zur Bereitstellung einer Unterstützungskraft für den Körperteil, insbesondere die Gliedmaße.

Exoskelette sind aus der US10864102B2, US10918559B2 und der US10165847B2 bekannt.

Die EP 3 278 938 A1 betrifft ein tragbares Gerät zum Assistieren eines Menschen. Das tragbare Gerät umfasst eine zentrale Einheit mit einer Weste und/oder einem Gürtel und eine modulare Unterstützungsstruktur. Die zentrale Einheit umfasst wenigstens eine erste Schnittstelle, die an der Weste und/oder dem Gürtel angebracht ist. Die modulare Unterstützungsstruktur umfasst eine zweite Schnittstelle, die abnehmbar mit der ersten Schnittstelle verbunden werden kann.

Die KR 10 20198 0087298 beschreibt ein Torso-Unterstützungs-Exoskelett, das an ein Menschen-Schnittstellen-System gekoppelt werden kann, das konfiguriert ist, von einer Person getragen zu werden.

Die DE 10 2018 112 558 A1 betrifft eine Unterstützungsvorrichtung mit einer Körpertrageeinheit.

Eine Aufgabe der Erfindung besteht darin, ein flexibel einsetzbares Exoskelett bereitzustellen.

Die Aufgabe wird gelöst durch ein Exoskelett gemäß Anspruch 1. Der Basisabschnitt des Exoskeletts weist einen Hauptabschnitt und ein textiles Tragesystem auf, mit dem der Basisabschnitt an dem Körperabschnitt anbringbar ist.

Alternativ weist der Unterstützungsabschnitt einen Hauptabschnitt und ein textiles Tragesystem auf, mit der der Unterstützungsabschnitt an dem Körperteil, und zwar einem Rücken des menschlichen Körpers, anbringbar ist. Das Exoskelett umfasst ferner eine Tragesystem-Befestigungsschnittstelle, mit der das textile Tragesystem insbesondere werkzeuglos lösbar an dem Hauptabschnitt befestigt ist. Das textile Tragesystem weist einen Rückentextilabschnitt, insbesondere einen Rückennetzabschnitt, zur Anlage, insbesondere zumindest teilweisen Anlage, an dem Rücken eines Anwenders des Exoskeletts auf, wobei der Basisabschnitt oder der Unterstützungsabschnitt ein Rückenteil umfasst und der Rückentextilabschnitt zwischen einer oberen Befestigungsstelle am Rückenteil und einer unterhalb der oberen Befestigungsstelle angeordneten unteren Befestigungsstelle am Rückenteil gespannt ist, so dass der Rückentextilabschnitt zwischen der oberen Befestigungsstelle und der unteren Befestigungsstelle von dem Rückenteil beabstandet ist.

Das textile Tragesystem umfasst insbesondere ein Rückennetz, einen oder zwei Schultergurte und/oder einen Beckengurt. Die Tragesystem-Befestigungsschnittstelle ist beispielsweise als Schnellwechselsystem ausgeführt. Die Tragesystem-Befestigungsschnittstelle ermöglicht eine Trennung der textilen Komponenten des Exoskeletts vom restlichen Exoskelett, das auch als Exoskelett-Hauptteil bezeichnet werden soll. Dies ermöglicht eine einfache Verwendung des Exoskelett-Hauptteils mit verschiedenen, insbesondere an verschiedene Einsatzbedingungen und/oder verschiedene Anwender angepassten, textilen Tragesystemen. Ferner kann das textile Tragesystem bei Verschmutzungen in einfacher Weise vom Exoskelett-Hauptteil abgenommen und zweckmäßigerweise gewaschen werden. Das Exoskelett kann somit flexibel eingesetzt werden.

Vorteilhafte Weiterbildungen sind Gegenstand der Unteransprüche.

Die Erfindung betrifft ferner ein Verfahren gemäß Anspruch 14 und ein Verfahren gemäß Anspruch 15.

Weitere exemplarische Details sowie beispielhafte Ausführungsformen werden nachstehend unter Bezugnahme auf die Figuren erläutert. Dabei zeigt
- Figur 1: eine schematische Seitenansicht einer Exoskelett-Vorrichtung,
- Figur 2: eine schematische Seitenansicht eines von einem Anwender getragenen Exoskeletts,
- Figur 3: eine schematische Detailansicht eines Unterstützungsabschnitts des Exoskeletts,
- Figur 4: eine schematische Rückansicht des Exoskeletts,
- Figur 5: eine perspektivische Ansicht einer exemplarischen Ausgestaltung des Exoskeletts,
- Figur 6: eine vergrößerte Darstellung einer in der Figur 5 gezeigten oberen Befestigungsstelle,
- Figur 7: eine Sicherheits-Befestigungseinrichtung,
- Figur 8: eine vergrößerte Darstellung einer in der Figur 5 gezeigten unteren Befestigungsstelle,
- Figur 9: eine Frontansicht auf die exemplarische Ausgestaltung des Exoskeletts,
- Figur 10: eine Seitenansicht auf die exemplarische Ausgestaltung des Exoskeletts,
- Figur 11: eine schematische Seitenansicht des von dem Anwender getragenen Exoskeletts, wobei der Anwender eine nach vorne gebeugte Körperhaltung eingenommen hat,
- Figur 12: eine Anordnung mit einem Exoskelett und einem zweiten textilen Tragesystem,
- Figur 13: eine perspektivische Ansicht auf eine Gelenk-Befestigungseinrichtung,
- Figur 14: ein erster Schnitt durch die Gelenk-Befestigungseinrichtung,
- Figur 15: ein zweiter Schnitt durch die Gelenk-Befestigungseinrichtung,
- Figur 16: eine schematische Frontansicht einer Armbefestigung,
- Figur 17: eine schematische Seitenansicht einer Armbefestigung gemäß einer ersten Variante,
- Figur 18: eine schematische Seitenansicht einer Armbefestigung gemäß einer zweiten Variante,
- Figur 19: eine schematische Seitenansicht einer Armbefestigung gemäß einer dritten Variante
- Figur 20: ein Exoskelett gemäß einer zweiten Ausführungsform, und
- Figur 21: das Exoskelett gemäß der zweiten Ausführungsform.

Bei den nachfolgenden Erläuterungen wird Bezug genommen auf die in den Figuren eingezeichneten, orthogonal zueinander ausgerichteten Raumrichtungen x-Richtung, y-Richtung und z-Richtung. Die z-Richtung kann auch als Vertikalrichtung, die x-Richtung als Tiefenrichtung und die y-Richtung als Breitenrichtung bezeichnet werden.

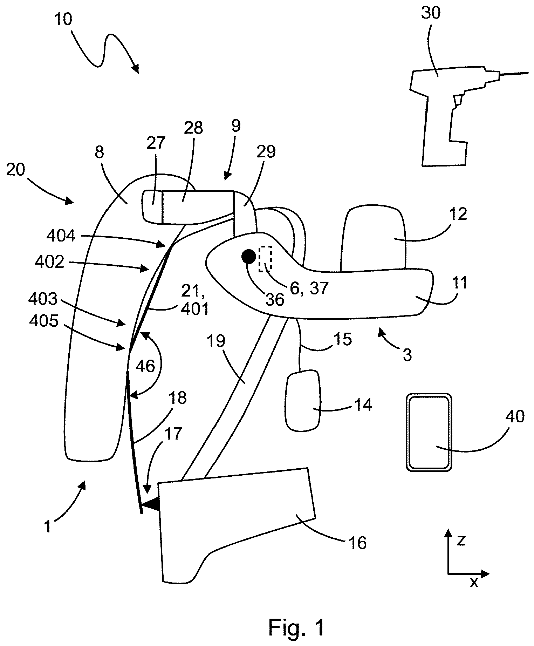

Die Figur 1 zeigt eine schematische Darstellung einer Exoskelett-Vorrichtung 10, die ein Exoskelett 20 sowie optional ein Werkzeug 30 und/oder ein Mobilgerät 40 umfasst. Das Exoskelett 20 kann auch für sich genommen bereitgestellt sein. Das Werkzeug 30 und/oder das Mobilgerät 40 sind exemplarisch separat von dem Exoskelett 20 vorhanden, also insbesondere nicht mechanisch mit dem Exoskelett 20 verbunden. Bei dem Werkzeug 30 handelt es sich beispielsweise um ein Elektrowerkzeug, insbesondere um einen Akkuschrauber und/oder eine Bohrmaschine und/oder eine Schleifmaschine. Das Mobilgerät 40 ist vorzugsweise ein Smartphone oder ein Tablet. Optional ist das Exoskelett 20 ausgebildet, mit dem Werkzeug 30 und/oder dem Mobilgerät 40 zu kommunizieren, insbesondere drahtlos.

Exemplarisch ist das Exoskelett 20 in einer aufrechten Ausrichtung mit seiner Vertikalachse (die insbesondere parallel zu einer Basisabschnitt-Achse 62 verläuft) parallel zur z-Richtung ausgerichtet. Insbesondere ist das Exoskelett 20 in der aufrechten Ausrichtung mit seiner Sagitalachse parallel zur x-Richtung ausgerichtet. Die Sagitalachse des Exoskeletts 20 verläuft in einem Zustand, in dem der Anwender das Exoskelett 20 angelegt hat, parallel zur Sagitalachse des Anwenders, also insbesondere parallel zu einer Richtung von hinten - also insbesondere dem Rücken des Anwenders - nach vorne - also insbesondere der Brust des Anwenders. Die Horizontalachse des Exoskeletts 20 verläuft insbesondere in Breitenrichtung des Exoskeletts 20 und/oder parallel zur y-Richtung. Die Horizontalachse des Exoskeletts 20 verläuft in einem Zustand, in dem der Anwender das Exoskelett 20 angelegt hat, parallel zur Horizontalachse des Anwenders, also insbesondere parallel zu einer Richtung von einer ersten Schulter des Anwenders zu einer zweiten Schulter des Anwenders. Die Vertikalachse des Exoskeletts 20, Sagitalachse des Exoskeletts 20 und die Horizontalachse des Exoskeletts 20 sind orthogonal zueinander ausgerichtet.

Die Exoskelett-Vorrichtung 10 ist insbesondere für den handwerklichen und/oder den industriellen Einsatz ausgebildet. Vorzugsweise ist die Exoskelett-Vorrichtung 10 nicht für einen medizinischen und/oder nicht für einen therapeutischen Einsatz ausgebildet.

Das Exoskelett 20 ist ein aktives Exoskelett und verfügt insbesondere über eine interne Energiequelle, aus der die Energie für die Unterstützungskraft bereitgestellt wird. Insbesondere ist das Exoskelett 20 ein aktives Exoskelett zur aktiven Unterstützung eines Körperteils, beispielsweise des Schultergelenks, des Anwenders.

Das Exoskelett 20 umfasst einen Basisabschnitt 1, der zur Anbringung an einen Körperabschnitt eines menschlichen Körpers eines Anwenders dient. Exemplarisch dient der Basisabschnitt 1 dazu, an den Torso 2 des menschlichen Körpers angebracht zu werden.

Der Basisabschnitt 1 umfasst einen Hauptabschnitt und ein textiles Tragesystem, das insbesondere lösbar an dem Hauptabschnitt angebracht ist. Der Hauptabschnitt dient exemplarisch dazu, mittels des textilen Tragesystems an dem Rücken des menschlichen Körpers getragen zu werden, insbesondere rucksackartig. Der Hauptabschnitt umfasst ein Rückenteil 8, das insbesondere länglich ausgeführt ist und das zweckmäßigerweise mit seiner Längsachse vertikal und/oder in Längsrichtung des Rückens des Anwenders ausgerichtet ist. Beispielsweise erstreckt sich die Längsrichtung des Rückenteils 8 entlang der Längsrichtung des Rückens. Der Hauptabschnitt umfasst ferner ein insbesondere leistenförmiges und/oder steifes Kraftübertragungselement 18, das sich von dem Rückenteil 8 nach unten hin zu einem Beckengurt 16 erstreckt, um das Rückenteil 8 mechanisch mit dem Beckengurt 16 zu koppeln. Das Kraftübertragungselement 18 dient zweckmäßigerweise dazu, um eine von einem Unterstützungsabschnitt 3 auf das Rückenteil 8 übertragene Reaktionskraft weiter zum Beckengurt 16 zu übertragen. Exemplarisch ist das Rückenteil 8 schlauchförmig und/oder rucksackförmig ausgeführt. Das Rückenteil 8 ist insbesondere steif ausgeführt. Insbesondere umfasst das Rückenteil 8 ein zweckmäßigerweise steifes Rückenteil-Gehäuse, das beispielsweise aus einem insbesondere steifen Kunststoff und/oder als Hartschale gefertigt ist. Das Rückenteil 8 dient zweckmäßigerweise dazu, eine Kraft von dem Unterstützungsabschnitt 3 an das Kraftübertragungselement 18 zu übertragen und/oder Komponenten für die Steuerung der Unterstützungskraft aufzunehmen.

Der Unterstützungsabschnitt 3 kann zweckmäßigerweise als Armaktor bezeichnet werden.

Das Kraftübertragungselement 18 ist exemplarisch schwertförmig ausgeführt und kann auch als Schwert bezeichnet werden. Zweckmäßigerweise ist das Kraftübertragungselement 18 relativ zum Rückenteil 8 verstellbar ausgeführt, um insbesondere die vertikale Erstreckung des Hauptabschnitts und/oder einen dem Rücken des Anwenders zugewandten Kraftübertragungselement-Winkel 46 zwischen dem Kraftübertragungselement 18 und dem Rückenteil 8 zu verändern. Zweckmäßigerweise ist das Kraftübertragungselement 18 translatorisch und/oder rotatorisch beweglich relativ zum Rückenteil 8 gelagert und insbesondere in verschiedene translatorische und/oder rotatorische Stellungen relativ zum Rückenteil 8 versetzbar und insbesondere verriegelbar. Die translatorische Bewegung erfolgt insbesondere vertikal. Die rotatorische Bewegung erfolgt zweckmäßigerweise um eine parallel zur y-Richtung ausgerichtete Verstellachse.

Das textile Tragesystem umfasst exemplarisch den Beckengurt 16 und/oder wenigstens einen, vorzugsweise zwei, Schultergurte 19. Der Beckengurt 16 bildet zweckmäßigerweise eine Schlaufe, so dass er im getragenen Zustand den Torso 2, insbesondere die Hüfte, des Anwenders umschließt. Jeder Schultergurt 19 verläuft exemplarisch vom Hauptabschnitt, insbesondere vom Rückenteil 8, hin zum Beckengurt 16, und zwar zweckmäßigerweise im getragenen Zustand des Exoskeletts 20 über eine jeweilige Schulter des Anwenders.

Das Exoskelett 20 umfasst ferner exemplarisch ein Kraftübertragungselement-Gelenk 17, über das das Kraftübertragungselement 18 an dem Beckengurt 16 angebracht ist. Das Kraftübertragungselement-Gelenk 17 ist beispielsweise als Kugelgelenk ausgeführt und kann als Sakrumgelenk bezeichnet werden. Im getragenen Zustand des Exoskeletts 20 ist das Kraftübertragungselement-Gelenk 17 im unteren Rückenbereich des Anwenders angeordnet, insbesondere in Breitenrichtung zentriert.

Das textile Tragesystem umfasst exemplarisch ferner ein Rückennetz 21, das an der dem Rücken des Anwenders zugewandten Seite des Rückenteils 8 angeordnet ist. Im getragenen Zustand des Exoskeletts 20 liegt das Rückennetz 21 an dem Rücken des Anwenders an, insbesondere zumindest teilweise und/oder im oberen Rückenbereich.

Das Exoskelett 20 umfasst ferner den beweglich mit dem Basisabschnitt 1 gekoppelten Unterstützungsabschnitt 3 zur Unterstützung eines Körperteils, vorzugsweise einer Gliedmaße, insbesondere eines Arms 4, des menschlichen Körpers des Anwenders. Der Unterstützungsabschnitt 3 ist insbesondere ausgebildet, an dem Körperteil, vorzugsweise der Gliedmaße, insbesondere dem Arm 4, des Anwenders befestigt zu werden. Der Unterstützungsabschnitt 3 umfasst exemplarisch ein insbesondere steifes Armteil 11 und eine am Armteil 11 angeordnete Armbefestigung 12, die exemplarisch als Armschale ausgeführt ist. Das Armteil 11 ist exemplarisch länglich ausgeführt und ist im getragenen Zustand mit seiner Längsachse in Richtung der Längsachse des Arms des Anwenders ausgerichtet. Exemplarisch erstreckt sich das Armteil 11 von der Schulter des Anwenders bis zum Ellbogenbereich des Anwenders. Das Exoskelett 20, insbesondere das Armteil 11, endet exemplarisch am Ellbogenbereich des Anwenders. Die Armbefestigung 12 dient insbesondere zur Befestigung des Unterstützungsabschnitts 3 an dem Arm 4, insbesondere dem Oberarm des Anwenders. Insbesondere umgreift die Armschale den Oberarm des Anwenders, insbesondere zumindest teilweise, so dass der Oberarm mit einem Band in der Armschale gehalten werden kann. Der Unterarm des Anwenders wird zweckmäßigerweise nicht am Exoskelett 20 befestigt.

Der Körperteil ist vorzugsweise eine Gliedmaße des menschlichen Körpers. Beispielsweise ist der Körperteil ein Arm des menschlichen Körpers. Ferner kann es sich bei dem Körperteil um den Rücken des menschlichen Körpers handeln. In diesem Fall dient der Basisabschnitt zweckmäßigerweise zur Anbringung an ein Bein und/oder das Becken des menschlichen Körpers; d.h. der Körperabschnitt (an den der Basisabschnitt anzubringen ist) kann in dem Fall, in dem der Körperteil der Rücken ist, beispielsweise ein Bein sein.

Der Unterstützungsabschnitt 3 ist exemplarisch um eine horizontale Schwenkachse relativ zum Basisabschnitt 1, insbesondere relativ zum Rückenteil 8, verschwenkbar gelagert. Exemplarisch ist der Unterstützungsabschnitt 3 direkt an einem Schulterteil 29 gelagert. Die horizontale Schwenkachse kann auch als Hebeachse 36 bezeichnet werden. Im getragenen Zustand des Exoskeletts 20 ist die Hebeachse 36 im Bereich der Schulter des Anwenders angeordnet. Das Exoskelett 20 ist insbesondere ausgebildet, mit dem Unterstützungsabschnitt 3 das Schultergelenk des Anwenders zu unterstützen. Im getragenen Zustand des Exoskeletts 20 kann der Anwender durch ein Verschwenken des Unterstützungsabschnitts 3 um die Hebeachse 36 mit seinem von dem Unterstützungsabschnitt 3 unterstützten Arm 4 eine Hebebewegung ausführen. Die Hebeachse 36 kann insbesondere in y-Richtung ausgerichtet sein. Zweckmäßigerweise liegt die Hebeachse 36 stets in einer horizontalen Ebene, beispielsweise einer x-y-Ebene. Unter einer horizontalen Ebene ist insbesondere eine exakt horizontale Ebene und/oder eine Ebene zu verstehen, die maximal um 10 Grad, 7 Grad oder 5 Grad gegenüber einer Horizontalen gekippt ist.

Der Schwenkwinkel 47 des Unterstützungsabschnitts 3 um die Hebeachse 36 relativ zum Basisabschnitt 1 soll auch als Hebewinkel bezeichnet werden. Der Schwenkwinkel 47 hat bei einem nach unten ausgerichteten Unterstützungsabschnitt 3 (bei einem vertikal ausgerichteten Exoskelett 20) einen Referenzwert, insbesondere einen Minimalwert, und steigt bei einem nach oben gerichteten Verschwenken des Unterstützungsabschnitts 3 kontinuierlich bis zu einem Maximalwert an. Der Minimalwert ist insbesondere ein betragsmäßiger Minimalwert, beispielsweise Null.

Exemplarisch ist der Schwenkwinkel 47 als Winkel zwischen einer Unterstützungsabschnitt-Achse 61 und einer Basisabschnitt-Achse 62 definiert. Die Unterstützungsabschnitt-Achse 61 verläuft in Längsrichtung des Unterstützungsabschnitts 3. Exemplarisch verläuft die Unterstützungsabschnitt-Achse 61 von der Hebeachse 36 in Richtung zu der Armbefestigung 12. In einem Zustand, in dem der Anwender das Exoskelett 20 angelegt hat, verläuft die Unterstützungsabschnitt-Achse 61 zweckmäßigerweise parallel zu einer Oberarm-Achse des von dem Unterstützungsabschnitt 3 unterstützten Arms 4. Die Basisabschnitt-Achse 62 stellt zweckmäßigerweise eine vertikale Achse des Basisabschnitts 1 dar und verläuft vertikal nach unten, insbesondere bei einer vertikalen Ausrichtung des Basisabschnitts 1, beispielsweise in einem Zustand, in dem der Anwender das Exoskelett 20 angelegt hat und aufrecht steht. Der Schwenkwinkel 47 liegt exemplarisch in einer z-x-Ebene, beispielsweise dann, wenn der Anwender aufrecht steht und die Arme nach vorne gehoben werden.

Das Exoskelett 20 umfasst exemplarisch eine Schultergelenkanordnung 9, über die der Unterstützungsabschnitt 3 an dem Basisabschnitt 1, insbesondere dem Rückenteil 8, angebracht ist. Die Schultergelenkanordnung 9 umfasst zweckmäßigerweise eine Gelenkkette mit einem oder mehrerer Drehlager zur Definition einer oder mehrerer vertikaler Drehachsen. Mittels der Gelenkkette ist zweckmäßigerweise ein Verschwenken des Unterstützungsabschnitts 3 relativ zum Basisabschnitt 1, insbesondere relativ zum Rückenteil 8, in einer vorzugsweise horizontalen Schwenkebene möglich, beispielsweise um eine insbesondere virtuelle vertikale Drehachse. Insbesondere ermöglicht es die Gelenkkette dem Anwender, seinen von dem Unterstützungsabschnitt 3 unterstützten Arm 4 um eine durch die Schulter des Anwenders verlaufende vertikale Drehachse zu schwenken, wobei der Unterstützungsabschnitt 3 mit dem Arm 4 mitbewegt wird. Exemplarisch ist die Gelenkkette passiv ausgeführt, so dass das Exoskelett 20 bei dem Verschwenken des Arms in der vorzugsweise horizontalen Schwenkebene keine aktive Unterstützungskraft in Richtung der horizontalen Schwenkbewegung bereitstellt.

Die Schultergelenkanordnung 9 ist zweckmäßigerweise derart angeordnet und/oder ausgebildet, dass sie einen freien Raum definiert, der sich im getragenen Zustand des Exoskeletts 20 oberhalb der Schulter des das Exoskelett 20 tragenden Anwenders befindet, so dass der Anwender durch den freien Raum an der Schultergelenkanordnung 9 vorbei seinen von dem Unterstützungsabschnitt 3 unterstützen Arm senkrecht nach oben ausrichten kann.

Die Schultergelenkanordnung 9 umfasst exemplarisch einen inneren Schultergelenkabschnitt 27, der mittels eines ersten Drehlagers der Schultergelenkanordnung 9 um eine erste vertikale Drehachse verschwenkbar relativ zum Basisabschnitt 1, insbesondere zum Rückenteil 8, gelagert ist. Die Schultergelenkanordnung 9 umfasst exemplarisch ferner einen äußeren Schultergelenkabschnitt 28, der mittels eines zweiten Drehlagers der Schultergelenkanordnung 9 um eine zweite vertikale Drehachse verschwenkbar relativ zum inneren Schultergelenkabschnitt 27 gelagert ist. Die Schultergelenkanordnung 9 umfasst exemplarisch ferner ein Schulterteil 29, dass mittels eines dritten Drehlagers der Schultergelenkanordnung 9 um eine dritte vertikale Drehachse verschwenkbar relativ zum äußeren Schultergelenkabschnitt 28 gelagert ist. Vorzugsweise sind der innere Schultergelenkabschnitt 27, der äußere Schultergelenkabschnitt 28 und das Schulterteil 29 in der Schultergelenkanordnung 9 derart als die Gelenkkette miteinander kinematisch gekoppelt, dass durch den Schwenkwinkel des inneren Schultergelenkabschnitts 27 relativ zum Basisabschnitt 1 der Schwenkwinkel des äußeren Schultergelenkabschnitt 28 relativ zum inneren Schultergelenkabschnitt 27 und/oder der Schwenkwinkel des Schulterteils 29 relativ zum äußeren Schultergelenkabschnitt 28 festgelegt wird.

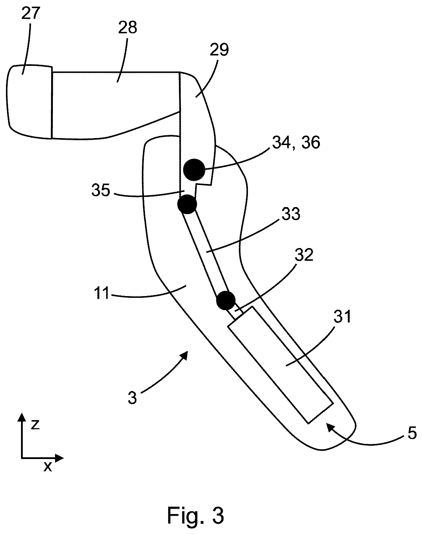

Die Figur 3 zeigt eine schematische Detailansicht des Unterstützungsabschnitts 3, wobei innerhalb des Armteils angeordnete Komponenten sichtbar eingezeichnet sind. Das Armteil 11 umfasst zweckmäßigerweise ein Armteil-Gehäuse, das insbesondere steif ausgeführt und beispielsweise aus Kunststoff gefertigt ist.

Das Exoskelett 20 umfasst eine auf den Unterstützungsabschnitt 3 wirkende Aktoreinrichtung 5 zur Bereitstellung einer Unterstützungskraft für den Körperteil, insbesondere die Gliedmaße, exemplarisch für den Arm des Anwenders. Exemplarisch ist die Aktoreinrichtung 5 zumindest teilweise in dem Armteil 11 angeordnet.

Die Aktoreinrichtung 5 ist eine aktive Aktoreinrichtung. Zweckmäßigerweise stellt das Exoskelett 20 mittels der Aktoreinrichtung 5 die Unterstützungskraft mit einer in Richtung der Schwenkbewegung um die Hebeachse 36 nach oben wirkenden Kraftkomponente bereit, die den Arm 4 des Anwenders in Richtung der Schwenkbewegung nach oben drückt.

Vorzugsweise umfasst die Aktoreinrichtung 5 eine Aktoreinheit mit einem Aktorglied 32. Die Aktoreinheit kann das Aktorglied 32 mit einer Aktorkraft beaufschlagen, um die Unterstützungskraft bereitzustellen. Das Aktorglied 32 ist mit einem exzentrisch zur Hebeachse 36 angeordneten Exzenterabschnitt 35 gekoppelt. Der Exzenterabschnitt 35 ist beispielsweise Teil des Schulterteils 29. Über die Kopplung des Aktorglieds 32 mit dem Exzenterabschnitt 35 wird durch die Aktorkraft ein Drehmoment des Unterstützungsabschnitts 3 um die Hebeachse 36 relativ zum Basisabschnitt 1 und/oder dem Schulterteil 29 bereitgestellt. Durch dieses Drehmoment drückt der Unterstützungsabschnitt 3 gegen den Körperteil, vorzugsweise die Gliedmaße, insbesondere den Arm 4, des Anwenders, insbesondere nach oben, und stellt so die auf den Körperteil, vorzugsweise die Gliedmaße, insbesondere den Arm 4, des Anwenders wirkende Unterstützungskraft bereit.

Exemplarisch verfügt die Aktoreinrichtung 5 über ein insbesondere als Schubstange ausgeführtes Koppelelement 33, über das das Aktorglied 32 mit dem Exzenterabschnitt 35 gekoppelt ist.

Bevorzugt ist die Aktoreinrichtung 5 eine pneumatische Aktoreinrichtung und die Aktoreinheit ist zweckmäßigerweise als pneumatischer Antriebszylinder 31 ausgeführt. Das Aktorglied 32 ist die Kolbenstange des Antriebszylinders 31.

Alternativ kann die Aktoreinrichtung auch nicht als pneumatische Aktoreinrichtung ausgeführt sein. Beispielsweise kann die Aktoreinrichtung als hydraulische und/oder elektrische Aktoreinrichtung ausgeführt sein und zweckmäßigerweise als die Aktoreinheit eine hydraulische Antriebseinheit und/oder eine elektrische Antriebseinheit umfassen.

Der Antriebszylinder 31, das Aktorglied 32 und/oder das Koppelelement 33 sind bevorzugt in dem Armteil-Gehäuse angeordnet.

Das Exoskelett 20 umfasst zweckmäßigerweise ein Hebe-Drehlager 34, das die Hebeachse 36 bereitstellt. Exemplarisch ist der Unterstützungsabschnitt 3 über das Hebe-Drehlager 34 an der Schultergelenkanordnung 9 angebracht.

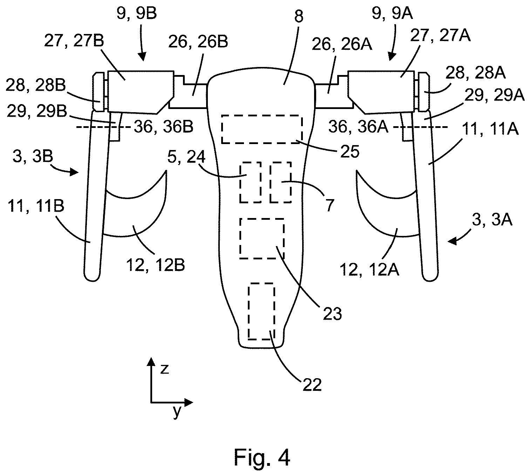

Die Figur 4 zeigt eine Rückansicht des Exoskeletts 20, wobei das textile Tragesystem und das Kraftübertragungselement 18 nicht gezeigt sind.

Das Exoskelett 20 umfasst exemplarisch einen oder mehrere Akkus 22, einen Kompressor 23, eine Ventileinheit 24 und/oder einen Drucklufttank 25, die zweckmäßigerweise Teil des Basisabschnitts 1 sind und insbesondere im Rückenteil-Gehäuse angeordnet sind.

Exemplarisch ist der Akku 22 unten am Rückenteil 8 angeordnet und insbesondere in eine Akku-Aufnahme des Rückenteils 8 von unten eingeschoben. Zweckmäßigerweise ist der Drucklufttank 25 in einem oberen Bereich im Rückenteil 8 angeordnet, exemplarisch (insbesondere in Längsrichtung des Rückenteils 8 und/oder Vertikalrichtung) über der Ventileinheit 24, der Steuereinrichtung 7, dem Kompressor 23 und/oder dem Akku 22. Die Ventileinheit 24 und/oder die Steuereinrichtung 7 ist (insbesondere in Längsrichtung des Rückenteils 8 und/oder Vertikalrichtung) zweckmäßigerweise über dem Kompressor und/oder über dem Akku 22 angeordnet. Der Kompressor 23 ist (insbesondere in Längsrichtung des Rückenteils 8 und/oder Vertikalrichtung) über dem Akku 22 angeordnet.

Der Akku 22 dient als elektrische Energieversorgung für das Exoskelett 20, insbesondere für den Kompressor 23, die Ventileinheit 24, eine Sensoreinrichtung 6 und/oder eine Steuereinrichtung 7.

Der Kompressor 23 ist ausgebildet, Luft zu komprimieren, um Druckluft zu erzeugen. Der Drucklufttank 25 ist ausgebildet, Druckluft - insbesondere die von dem Kompressor 23 erzeugte Druckluft - zu speichern.

Die Ventileinheit 24 umfasst zweckmäßigerweise ein oder mehrere elektrisch betätigbare Ventile und ist insbesondere ausgebildet, eine pneumatische Verbindung von dem Drucklufttank 25 zu einer Druckkammer des pneumatischen Antriebzylinders 31 zu beeinflussen, insbesondere wahlweise herzustellen und/oder zu sperren. Zweckmäßigerweise ist die Ventileinheit 24 ferner ausgebildet, eine pneumatische Verbindung von dem Drucklufttank 25 zur Umgebung des Exoskelett 20 und/oder eine pneumatische Verbindung von der Druckkammer des Antriebszylinders 31 zur Umgebung des Exoskelett 20 zu beeinflussen, insbesondere wahlweise herzustellen und/oder zu sperren. Die Ventileinheit 24 ist zweckmäßigerweise Teil der Aktoreinrichtung 5.

Das Exoskelett 20 umfasst ferner eine Sensoreinrichtung 6. Exemplarisch umfasst die Sensoreinrichtung 6 einen Winkelsensor 37 zur Erfassung des Winkels des Unterstützungsabschnitts 3 relativ zum Basisabschnitt 1, insbesondere des Armteils 11 relativ zum Schulterteil 29. Dieser Winkel soll auch als Schwenkwinkel 47 oder als Hebewinkel bezeichnet werden. Der Winkelsensor 37 dient insbesondere zur Erfassung des Winkels des Unterstützungsabschnitts 3 um die Hebeachse 36. Der Winkelsensor 37 ist beispielsweise als Inkrementalgeber ausgeführt und insbesondere am Hebe-Drehlager 34, insbesondere im Armteil 11 und/oder im Schulterteil 29 angeordnet.

Bevorzugt umfasst die Sensoreinrichtung 6 ferner wenigstens einen Drucksensor zur Erfassung des in der Druckkammer des Antriebszylinders 31 und/oder des in dem Drucklufttank 25 herrschenden Drucks. Der wenigstens eine Drucksensor ist zweckmäßigerweise im Rückenteil 8 und/oder im Armteil 11 angeordnet.

Die Exoskelett-Vorrichtung 10, insbesondere das Exoskelett 20, umfasst zweckmäßigerweise eine Steuereinrichtung 7, die beispielsweise einen Microcontroller umfasst oder als Microcontroller ausgeführt ist. Die Steuereinrichtung 7 dient insbesondere dazu, die Aktoreinrichtung 5, insbesondere die Ventileinheit 24, anzusteuern, um die Bereitstellung der Unterstützungskraft zu steuern. Ferner dient die Steuereinrichtung 7 zum Auslesen der Sensoreinrichtung 6, insbesondere zum Auslesen von von der Sensoreinrichtung 6 erfassten Daten und/oder zur Kommunikation mit dem Werkzeug 30 und/oder dem Mobilgerät 40. Vorzugsweise ist die Steuereinrichtung 7 ausgebildet, durch Ansteuerung der Ventileinheit 24 den in der Druckkammer des Antriebszylinders 31 herrschenden Druck einzustellen, insbesondere zu regeln, beispielsweise unter Berücksichtigung eines mittels des Drucksensors erfassten Druckwerts. Insbesondere ist die Steuereinrichtung 7 ausgebildet, zur Erhöhung der Unterstützungskraft den in der Druckkammer herrschenden Druck durch Ansteuerung der Ventileinheit 24 zu erhöhen und/oder zur Reduzierung der Unterstützungskraft den in der Druckkammer herrschenden Druck durch Ansteuerung der Ventileinheit 24 zu reduzieren.

Gemäß einer bevorzugten Ausgestaltung ist die Steuereinrichtung 7 ausgebildet, die Unterstützungskraft auf Basis des insbesondere mittels des Winkelsensors 37 erfassten Schwenkwinkels 47 des Unterstützungsabschnitts 3 einzustellen. Zweckmäßigerweise kann der Anwender durch seine Muskelkraft den Schwenkwinkel 47 des Unterstützungsabschnitts 3 durch ein Verschwenken seines Arms 4 verändern, und dadurch insbesondere die Bereitstellung der Unterstützungskraft beeinflussen. Insbesondere ist die Unterstützungskraft niedrig genug, sodass der Anwender durch seine Muskelkraft den Schwenkwinkel 47 des Unterstützungsabschnitts 3 durch ein Verschwenken seines Arms 4 verändern kann. Die Unterstützungskraft wird beispielsweise durch die Auslegung des pneumatischen Systems, insbesondere des Kompressors, und/oder durch die Steuereinrichtung 7 begrenzt.

Die Steuereinrichtung 7 ist vorzugsweise Teil des Exoskeletts 20 und exemplarisch in dem Basisabschnitt 1, insbesondere in dem Rückenteil 8 angeordnet. Optional kann die Steuereinrichtung 7 zumindest teilweise in dem Mobilgerät 40 implementiert sein.

Das Exoskelett 20 umfasst exemplarisch ein Bedienelement 14, das zweckmäßigerweise über ein Bedienelement-Kabel 15 am Basisabschnitt 1 befestigt ist. Über das Bedienelement 14 kann der Anwender das Exoskelett 20 steuern und insbesondere die Unterstützungskraft aktivieren, deaktivieren und/oder auf einen aus mehreren möglichen Kraftwerten größer null einstellen.

Das Exoskelett 20 verfügt exemplarisch ferner über ein Verbindungselement 26, über das die Schultergelenkanordnung 9 an dem Basisabschnitt 1, insbesondere dem Rückenteil 8, befestigt ist. Das Verbindungselement 26 ist exemplarisch als Auszugelement ausgeführt. Das Verbindungselement 26 ist zweckmäßigerweise relativ zum Basisabschnitt 1, insbesondere relativ zum Rückenteil 8, in seiner Position verstellbar, um die Position der Schultergelenkanordnung 9 und des Unterstützungsabschnitts 3 an die Schulterbreite des Anwenders anpassen zu können. Insbesondere ist die Position des Verbindungselements 26 durch Einschieben oder Ausziehen des Verbindungselements 26 in oder aus dem Rückenteil 8 verstellbar.

Exemplarisch verfügt das Exoskelett 20 über einen ersten Unterstützungsabschnitt 3A, eine erste Schultergelenkanordnung 9A und ein erstes Verbindungselement 26A, sowie über einen zweiten Unterstützungsabschnitt 3B, eine zweite Schultergelenkanordnung 9B und über ein zweites Verbindungselement 26B. Die Komponenten, deren Bezugszeichen mit dem Zusatz "A" oder "B" versehen sind, sind zweckmäßigerweise jeweils in Entsprechung zu den mit der gleichen Bezugszeichen-Zahl aber ohne den Zusatz "A" oder "B" versehenen Komponenten ausgeführt, beispielsweise gleich oder spiegelsymmetrisch, so dass die diesbezüglichen Erläuterungen in Entsprechung gelten.

Der erste Unterstützungsabschnitt 3A, die erste Schultergelenkanordnung 9A und das erste Verbindungselement 26A sind auf einer ersten, exemplarisch der rechten, Seite (in Breitenrichtung) des Basisabschnitts 1 angeordnet, und dienen zur Unterstützung eines ersten, insbesondere des rechten, Arms des Anwenders.

Der zweite Unterstützungsabschnitt 3B, die zweite Schultergelenkanordnung 9B und das zweite Verbindungselement 26B sind auf einer zweiten, exemplarisch der linken, Seite (in Breitenrichtung) des Basisabschnitts 1 angeordnet, und dienen zur Unterstützung eines zweiten, insbesondere des linken, Arms des Anwenders.

Der erste Unterstützungsabschnitt 3A umfasst ein erstes Armteil 11A, eine erste Armbefestigung 12A und/oder eine erste Aktoreinheit, insbesondere einen ersten Antriebszylinder.

Der zweite Unterstützungsabschnitt 3A umfasst ein zweites Armteil 11B, eine zweite Armbefestigung 12B und/oder eine zweite Aktoreinheit, insbesondere einen zweiten Antriebszylinder.

Bevorzugt ist die Steuereinrichtung 7 ausgebildet, für den ersten Unterstützungsabschnitt 3A eine mittels der ersten Aktoreinheit bewirkte erste Unterstützungskraft einzustellen und für den zweiten Unterstützungsabschnitt 3B eine mittels der zweiten Aktoreinheit bewirkte zweite Unterstützungskraft einzustellen, die sich zweckmäßigerweise von der ersten Unterstützungskraft unterscheidet.

Die erste Schultergelenkanordnung 9A umfasst einen ersten inneren Schultergelenkabschnitt 27A, einen ersten äußeren Schultergelenkabschnitt 28A und ein erstes Schulterteil 29A. Die zweite Schultergelenkanordnung 9B umfasst einen zweiten inneren Schultergelenkabschnitt 27B, einen zweiten äußeren Schultergelenkabschnitt 28B und ein zweites Schulterteil 29B.

Der erste Unterstützungsabschnitt 3A ist um eine erste horizontale Hebeachse 36A relativ zum Basisabschnitt 1 verschwenkbar und der zweite Unterstützungsabschnitt 3B ist um eine zweite horizontale Hebeachse 36B relativ zum Basisabschnitt 1 verschwenkbar.

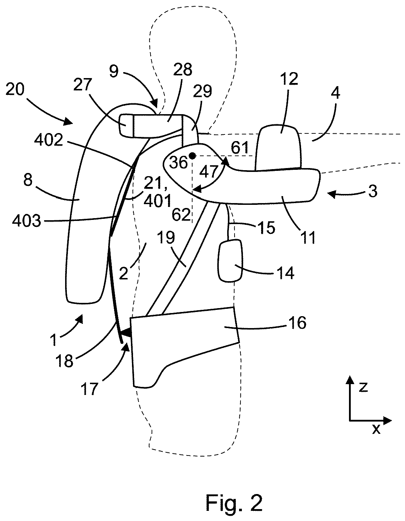

In der Figur 2 ist das Exoskelett 20 in einem Zustand gezeigt, in dem es von einem Anwender getragen, insbesondere bestimmungsgemäß getragen, wird. Mit der Formulierung, dass der Anwender das Exoskelett 20 trägt, insbesondere bestimmungsgemäß trägt, ist gemeint, dass der Anwender das Exoskelett angezogen - also angelegt - hat, und zwar exemplarisch dadurch, dass der Anwender das Rückenteil 8 rucksackartig auf seinem Rücken trägt, den Beckengurt 16 um seine Hüfte angelegt hat, der oder die die Schultergurte 19 über die Schulter oder die Schultern des Anwenders verlaufen und/oder ein oder beide Arme des Anwenders mit einer jeweiligen Armbefestigung 12 am jeweiligen Unterstützungsabschnitt 3 befestigt sind.

Exemplarisch ist das Exoskelett 20 ausgebildet, den Anwender bei einer Hebebewegung eines jeweiligen Arms, also bei einem nach oben gerichteten Verschwenken des jeweiligen Unterstützungsabschnitts 3 um eine jeweilige Hebeachse 36 mit einer jeweiligen, insbesondere nach oben wirkenden, Unterstützungskraft zu unterstützen. Ferner ist das Exoskelett 20 zweckmäßigerweise ausgebildet, den Anwender bei einer Senkbewegung, also bei einem nach unten gerichteten Verschwenken des jeweiligen Unterstützungsabschnitts 3 um eine jeweilige Hebeachse 36 mit einer jeweiligen insbesondere nach oben wirkenden Unterstützungskraft zu unterstützen oder entgegenzuwirken oder die jeweilige Unterstützungskraft bei der Senkbewegung zu deaktivieren oder zu reduzieren.

Der Basisabschnitt 1 weist den Hauptabschnitt und das textile Tragesystem auf, mit dem der Basisabschnitt 1 an dem Körperabschnitt, insbesondere dem Torso 2, anbringbar ist. Der Hauptabschnitt umfasst exemplarisch das Rückenteil 8 und das Kraftübertragungselement 18. Das textile Tragesystem umfasst einen Rückentextilabschnitt 401, der insbesondere das Rückennetz 21 umfasst, einen Beckengurtabschnitt, der insbesondere den Beckengurt 16 umfasst, und einen Schultergurtabschnitt, der insbesondere den einen oder die zwei Schultergurte 19 umfasst.

Das Exoskelett 20 umfasst ferner eine Tragesystem-Befestigungsschnittstelle, mit der das textile Tragesystem lösbar an dem Hauptabschnitt befestigt ist.

Das textile Tragesystem ist vorzugsweise so gestaltet, dass im getragenen Zustand eine Relativbewegung des Rückenteils 8 zum Rücken des Anwenders vermieden oder minimiert wird. Zunächst soll näher auf das textile Tragesystem eingegangen werden.

Exemplarisch sind sämtliche Komponenten des textilen Tragesystems zusammenhängend und/oder miteinander verbunden, insbesondere in einem Zustand, in dem das textile Tragesystem vom Hauptabschnitt abgenommen ist. Exemplarisch ist der Schultergurtabschnitt mit dem Rückentextilabschnitt 401 verbunden, insbesondere direkt, und/oder der Schultergurtabschnitt ist mit dem Beckengurtabschnitt verbunden, insbesondere direkt. Exemplarisch besteht keine direkte Verbindung zwischen dem Beckengurtabschnitt und dem Rückentextilabschnitt 401 und/oder der Beckengurtabschnitt und der Rückentextilabschnitt 401 sind indirekt über den Schultergurtabschnitt, insbesondere ausschließlich über den Schultergurtabschnitt verbunden, insbesondere in einem vom Hauptabschnitt abgenommenen Zustand.

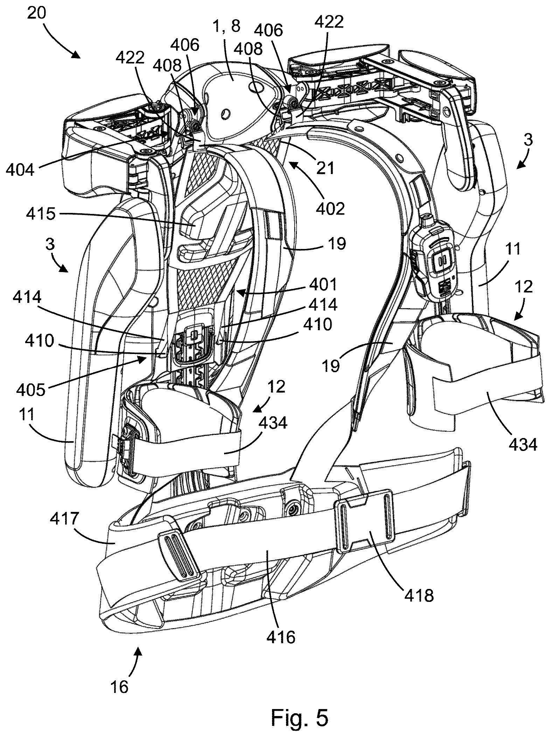

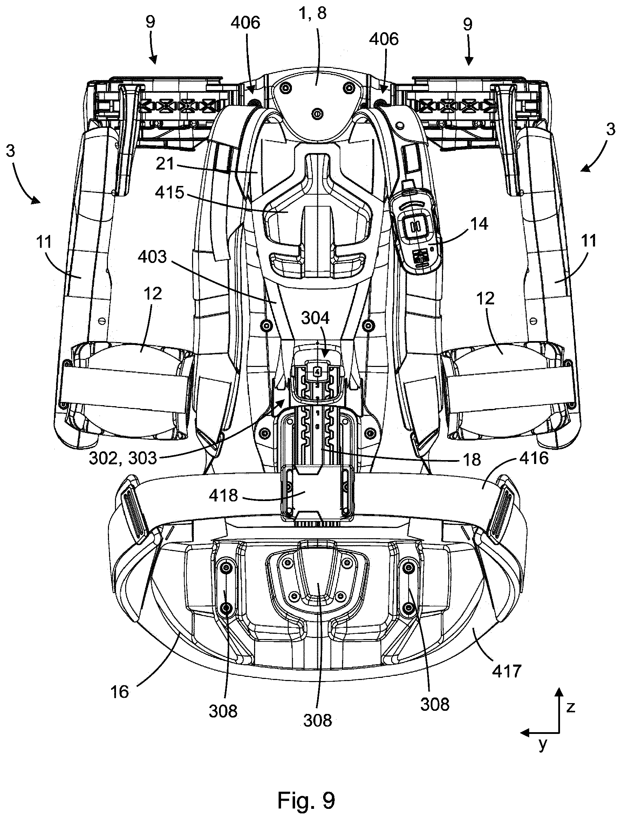

Eine exemplarische Ausgestaltung des Rückentextilabschnitts 401 ist in den Figuren 5, 9 und 10 zu sehen. Der Rückentextilabschnitt 401 umfasst zweckmäßigerweise das Rückennetz 21, einen Polsterabschnitt 415, eine oder zwei Schlaufen 414 und/oder eine oder mehrere Befestigungslaschen 408.

Der Rückentextilabschnitt 401 hat exemplarisch eine flächige Form und ist zweckmäßigerweise mit seiner flächenmäßig größten Seite parallel zur y-Richtung ausgerichtet. Der Normalenvektor der flächenmäßig größten Seite des Rückentextilabschnitts 401 ist zweckmäßigerweise nach oben und nach hinten ausgerichtet, also insbesondere in (positive) z-Richtung und (negative) x-Richtung, und hat insbesondere eine y-Komponente von null. Der Rückentextilabschnitt 401 ist also mit seiner Flächenebene gegenüber einer x-y-Ebene angewinkelt ausgerichtet.

Der Rückentextilabschnitt 401 erstreckt sich erfindungsgemäß von einer oberen Befestigungsstelle 404, an der der Rückentextilabschnitt 401 am Rückenteil 8 befestigt ist, zu einer unteren Befestigungsstelle 405, an der der Rückentextilabschnitt 401 am Rückenteil 8 befestigt ist. Die Richtung von der oberen Befestigungsstelle 404 zur unteren Befestigungsstelle 405 ist zweckmäßigerweise gleich der Längsrichtung des Rückentextilabschnitts 401, insbesondere in einer x-z-Ansicht. Die Längsrichtung des Rückentextilabschnitts 401 verläuft nach unten und nach hinten, also insbesondere in (negative) z-Richtung und (negative) x-Richtung, und hat insbesondere eine y-Komponente von null.

Die Länge und die Breite des Rückentextilabschnitts 401 sind zweckmäßigerweise ein Vielfaches so groß wie die Dicke des Rückentextilabschnitts 401. Die Länge ist die Erstreckung entlang der Längsrichtung, die Breite ist die Erstreckung entlang der y-Richtung und die Dicke ist die Erstreckung entlang des Normalenvektors der flächenmäßig größten Seite des Rückentextilabschnitts 401.

Das Rückennetz 21 weist einen oberen Rückennetz-Rand, einen unteren Rückennetz-Rand und zwei seitliche Rückennetz-Ränder auf. Die flächenmäßig größte Seite des Rückennetzes 21 kann insbesondere viereckig sein. Exemplarisch verjüngt sich das Rückennetz 21 in seiner y-Erstreckung nach unten hin. Insbesondere laufen die beiden seitlichen Rückennetz-Ränder nach unten aufeinander zu. In der x-z-Ansicht hat das Rückennetz 21 zweckmäßigerweise die Form einer Geraden, die in Längsrichtung des Rückentextilabschnitts 401 verläuft.

Im oberen Bereich des Rückentextilabschnitts 401, insbesondere am oberen Rückennetz-Rand, sind die Befestigungslaschen 408 angeordnet, insbesondere in y-Richtung verteilt und/oder beabstandet. Beispielsweise ist eine linke Befestigungslasche 408 an einer linken oberen Ecke des Rückennetzes 21 angeordnet und/oder eine rechte Befestigungslasche 408 ist an einer rechten oberen Ecke des Rückennetzes 21 angeordnet.

Im unteren Bereich des Rückentextilabschnitts 401, insbesondere am unteren Rückennetz-Rand, sind die Schlaufen 414 angeordnet, insbesondere in y-Richtung verteilt und/oder beabstandet. Beispielsweise ist eine linke Schlaufe 414 an einer linken unteren Ecke des Rückennetzes 21 angeordnet und/oder eine rechte Schlaufe 414 an einer rechten unteren Ecke des Rückennetzes 21 angeordnet.

Der Polsterabschnitt 415 ist exemplarisch auf der dem Rückenteil 8 abgewandten Seite des Rückentextilabschnitts 401, insbesondere des Rückennetzes 21, angeordnet. Exemplarisch erstreckt sich der Polsterabschnitt 415 nur über einen Teilbereich der Längserstreckung des Rückentextilabschnitts 401, insbesondere des Rückennetzes 21. Beispielsweise ist der Polsterabschnitt 415 in einem unteren Bereich 403 des Rückentextilabschnitts 401, insbesondere des Rückennetzes 21, nicht vorhanden. Insbesondere ist der Polsterabschnitt 415 im unteren Viertel des Rückennetzes 21 (in Längsrichtung des Rückentextilabschnitts 401) nicht vorhanden.

Bevorzugt ist der Polsterabschnitt 415 ausgeführt, eine Hinterlüftung des Rückens des Anwenders zu ermöglichen. Beispielsweise ist der Polsterabschnitt 415 als Rillenpolster ausgeführt und/oder aus einem atmungsaktiven Material gefertigt.

Optional ist der Polsterabschnitt 415 ausgeführt, eine Wärmeisolation für den Rücken des Anwenders bereitzustellen, beispielsweise für den Einsatz im Winter. Der Polsterabschnitt 415 ist in diesem Fall bevorzugt aus einem wärmeisolierenden Material gefertigt und insbesondere nicht als Rillenpolster ausgeführt.

Exemplarisch ist zwischen 30% und 60% der dem Rückenteil 8 abgewandten Vorderseite des Rückenetzes 21 mit dem Polsterabschnitt 415 bedeckt.

Optional wird eine Anordnung aus dem Exoskelett 20 und einem Austausch-Polsterabschnitt bereitgestellt. Der Polsterabschnitt 415 kann durch den Austausch-Polsterabschnitt ersetzt werden. Der Polsterabschnitt 415 und der Austausch-Polsterabschnitt unterscheiden sich vorzugsweise in ihrer Geometrie, Größe, Material und/oder Wärmeisolation.

Optional ist das Rückennetz 21 an den Außenkanten - insbesondere an den seitlichen Rückennetz-Rändern, an dem oberen Rückennetz-Rand und/oder an dem unteren Rückennetz-Rand - durch ein umlaufendes Band verstärkt, insbesondere um eine in einer x-z-Ansicht gekrümmte Passform des Rückennetzes 21 zu erzielen, insbesondere an den menschlichen Rücken angepasst.

Optional ist das Rückennetz 21 versteift, beispielsweise durch ein Einbringen von elastischen Profilen, beispielsweise Fiberglass-Stäben.

Zweckmäßigerweise wird durch die Anordnung der Befestigungslaschen 408 und der Schlaufen 414 das Rückennetz 21 flächig aufgespannt und erhält vorzugsweise auf diese Weise den bereits beschriebenen Verlauf relativ zum Rückenteil 8. Alternativ oder zusätzlich kann der gespannte Zustand des Rückennetzes 21 durch die beschriebene Verstärkung und/oder Versteifung realisiert sein.

Beispielhaft weist das Rückennetz 21 vom oberen Rückennetz-Rand bis zum unteren Rückennetz-Rand eine Erstreckung von 20 cm bis 30 cm, vorzugsweise eine Erstreckung von 25 cm, auf. Beispielhaft beträgt die Breite, also die Erstreckung in y-Richtung, des Rückennetzes 21 im Bereich des oberen Rückennetz-Rands zwischen 10 cm und 25 cm, beispielsweise 15 cm, und im Bereich des unteren Rückennetz-Rands zwischen 4 cm und 25 cm, beispielsweise 8 cm.

Der Beckengurtabschnitt umfasst exemplarisch den Beckengurt 16 und einen zweiten Gelenkabschnitt 306 (der insbesondere Teil des Kraftübertragungselement-Gelenks 17) bildet. Der Beckengurt 16 umfasst einen vorderen Gurtabschnitt 416 und einen hinteren Gurtabschnitt 417. Der vordere Gurtabschnitt 416 weist exemplarisch eine geringere z-Erstreckung auf als der hintere Gurtabschnitt 417 und/oder ist aus einem anderen Material, insbesondere einem flexibleren Material, als der hintere Gurtabschnitt 417 gefertigt. Der hintere Gurtabschnitt 417 hat exemplarisch die Form eines Ringabschnitts, insbesondere eines halben Rings. Der vordere Gurtabschnitt 416 ist an den vorderen Enden des hinteren Gurtabschnitts 417 befestigt. Der Beckengurt 16 weist die Form einer Schlaufe auf und verfügt über einen Verschluss 418, insbesondere am vorderen Gurtabschnitt 416, mit dem der Beckengurt 16 geöffnet und geschlossen werden kann.

Der Schultergurtabschnitt umfasst den einen oder die zwei Schultergurte 19. Der Schultergurtabschnitt, insbesondere jeder Gurt 19, verläuft von dem oberen Bereich 402 des Rückentextilabschnitts 401, insbesondere von dem oberen Rückentextil-Rand, zu dem Beckengurtabschnitt, insbesondere zu dem Beckengurt 16, vorzugsweise zu dem hinteren Gurtabschnitt 417. Exemplarisch verläuft ein linker Schultergurt 19 von einer linken oberen Ecke des Rückennetzes 21 zu einem Bereich links der Mitte (in Breitenrichtung) des hinteren Gurtabschnitts 417 und/oder ein rechter Schultergurt 19 verläuft von einer rechten oberen Ecke des Rückennetzes 21 zu einem Bereich rechts der Mitte (in Breitenrichtung) des hinteren Gurtabschnitts 417.

Erfindungsgemäß ist der Rückentextilabschnitt 401 zwischen der oberen Befestigungsstelle 404 am Rückenteil 8 und der unterhalb der oberen Befestigungsstelle 404 angeordneten unteren Befestigungsstelle 405 am Rückenteil 8 gespannt, so dass der Rückentextilabschnitt 401 zwischen der oberen Befestigungsstelle 404 und der unteren Befestigungsstelle 405 von dem Rückenteil 8 beabstandet ist. Insbesondere ist der Rückentextilabschnitt 401 so an dem Hauptabschnitt angeordnet, dass der Rückentextilabschnitt 401 eine Belüftung, insbesondere eine Hinterlüftung, des Rückens des Anwenders ermöglicht, insbesondere durch Verwendung eines luftdurchlässigen und/oder atmungsaktiven Rückentextilabschnitts 401.

Exemplarisch ist das (insbesondere formstabile) Rückenteil 8, insbesondere das Rückenteil-Gehäuse, auf der Vorderseite (also derjenigen Seite, an der der Rückentextilabschnitt 401 befestigt ist) gekrümmt, und zwar derart, dass sich in einer x-z-Ansicht ein konkaver Verlauf in Bezug auf den Anwender und/oder in x-Richtung nach vorne ergibt. Der Rückentextilabschnitt 401 ist in einer x-z-Ansicht zweckmäßigerweise weniger gekrümmt als die Vorderseite des Rückenteils 8 und/oder hat einen geraden Verlauf, so dass sich die Vorderseite des Rückenteils 8 ausgehend von der oberen Befestigungsstelle 404 in Richtung hin zu der unteren Befestigungsstelle 405 in der x-z-Ansicht immer weiter von dem Rückentextilabschnitt 401 entfernt, bis ein maximaler Abstand von insbesondere mehr als drei Zentimetern zwischen der Vorderseite und dem Rückentextilabschnitt 401 erreicht ist, und sich dann bis zur unteren Befestigungsstelle 405 immer weiter an den Rückentextilabschnitt 401 annähert.

Das Rückenteil 8 ist insbesondere als Hartkomponente, vorzugsweise als formstabile Komponente, und der Rückentextilabschnitt 401 zweckmäßigerweise als flexible Komponente, insbesondere als nicht-formstabile Komponente, ausgeführt. Insbesondere ist durch den Abstand zwischen dem Rückenteil 8 und dem Rückentextilabschnitt 401 eine Anpassung der Form des Rückentextilabschnitts 401 an die Form des Rückens des Anwenders möglich.

Exemplarisch weist das Rückenteil 8 eine Erstreckung in z-Richtung von 40 cm bis 60 cm, beispielsweise eine Erstreckung von 50 cm, auf. Die größte Erstreckung in y-Richtung beträgt zwischen 10 cm und 25 cm, beispielsweise 19 cm. Die Dicke des Rückenteils beträgt beispielsweise 10 cm, insbesondere an wenigstens einer Stelle.

Vorzugsweise liegt der Rückentextilabschnitt 401 im angelegten Zustand des Exoskeletts 20 flächig am Rücken des Anwenders an, insbesondere zumindest teilweise, und passt sich mit seiner Form an die Form des Rückens des Anwenders an. Das Rückenteil 8 liegt zweckmäßigerweise nicht oder nicht flächig am Rücken des Anwenders an und/oder passt sich in seiner Form nicht an den Rücken des Anwenders an.

Exemplarisch weist der Rückentextilabschnitt 401 Schlaufen 414 auf, mit denen der Rückentextilabschnitt 401 an der unteren Befestigungsstelle 405 in am Rückenteil 8 angeordnete Haken 410 eingehängt ist. Zweckmäßigerweise befindet sich die untere Befestigungsstelle 405 zwischen der Mitte (in z-Richtung) und dem unteren Ende des Rückenteils 8, vorzugsweise oberhalb des unteren Viertels der z-Erstreckung des Rückenteils 8.

Exemplarisch weist der Rückentextilabschnitt 401 Befestigungslaschen 408 auf, mit denen der Rückentextilabschnitt 401 an der oberen Befestigungsstelle 404 mittels am Rückenteil 8 angeordneter Befestigungsbolzen 409 lösbar befestigt ist. Zweckmäßigerweise ist die obere Befestigungsstelle 404 auf Höhe der Schultergelenkanordnung 9 angeordnet.

Der Rückentextilabschnitt 401 ist insbesondere als Rückennetzabschnitt ausgeführt und dient zweckmäßigerweise zur Anlage, insbesondere zumindest teilweisen Anlage, an dem Rücken eines Anwenders des Exoskeletts 20.

Bevorzugt ist der Rückentextilabschnitt 401 durch die Befestigung an dem Hauptabschnitt, insbesondere dem Rückenteil 8, in eine Form versetzt, in der der Rückentextilabschnitt 401 in einem Zustand, in dem das Exoskelett 20 an einem Anwender angebracht ist und der Anwender eine aufrechte Körperhaltung einnimmt, mit einem oberen Bereich 402 des Rückentextilabschnitts 401 an einem oberen Rückenbereich des Anwenders anliegt und, ausgehend von dem oberen Bereich 402, diagonal nach unten vom Rücken des Anwenders abragt, so dass ein unterer Bereich 403 des Rückentextilabschnitts 401 vom Rücken des Anwenders beabstandet ist. Beispielsweise ist der Rückentextilabschnitt 401 wenigstens mit dem unteren Viertel seiner z-Erstreckung vom Rücken des Anwenders beabstandet.

Der untere Bereich 403 erstreckt sich exemplarisch über wenigstens 30% und/oder maximal 60% der Längserstreckung des Rückentextilabschnitts 401.

Insbesondere hat der Rückentextilabschnitt 401 durch die Befestigung am Rückenteil 8 in der x-z-Ansicht eine ausgehend von der oberen Befestigungsstelle 404 nach unten (also in negative z-Richtung) und nach hinten (also in negative x-Richtung) verlaufende Form. Insbesondere verläuft der Rückentextilabschnitt 401 über seine gesamte Längserstreckung in der x-z-Ansicht ausgehend von der oberen Befestigungsstelle 404 diagonal nach unten und nach hinten. Vorzugsweise beträgt in der x-z-Ansicht der Winkel zwischen dem Verlauf des Rückentextilabschnitts 401 und der z-Richtung zwischen 10 und 30 Grad, exemplarisch 20 Grad.

Die Figur 2 zeigt die teilweise Anlage des Rückentextilabschnitts 401 am menschlichen Körper. Aufgrund der gekrümmten Form des Rückenteils und aufgrund des (in der x-z-Ansicht) diagonal nach unten und nach hinten verlaufenden Rückentextilabschnitts 401 liegt der Rückentextilabschnitt 401 im aufrechten Stand des Anwenders nur mit dem oberen Bereich 402, insbesondere dem Polsterabschnitt 415 an dem Anwender an, beispielsweise an oder zwischen dessen Schulterblättern.

Bevorzugt ist der Rückentextilabschnitt 401 durch die Befestigung an dem Hauptabschnitt, insbesondere am Rückenteil 8, in eine Form versetzt, in der der Rückentextilabschnitt 401 in einem Zustand, in dem das Exoskelett 20 an dem Anwender angebracht ist und der Anwender eine nach vorne gebeugte Körperhaltung einnimmt, der obere Bereich 402 und der untere Bereich 403 des Rückentextilabschnitts 401 am Rücken des Anwenders anliegen.

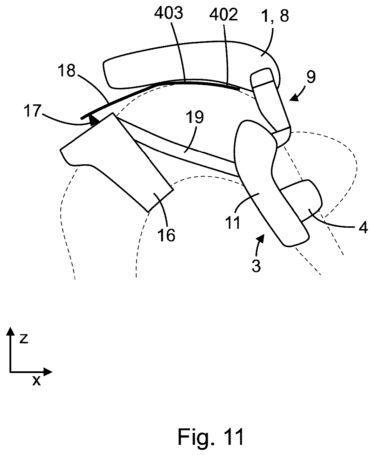

Wie in der Figur 11 gezeigt, ermöglicht die gekrümmte Form des Rückenteils 8 dem Anwender, sich mit dem angelegten Exoskelett 20 mit seinem Oberkörper nach vorne und/oder unten zu beugen. In diesem Zustand liegt ein größerer Anteil des Rückentextilabschnitts 401 am Rücken des Anwenders an.

Im Folgenden soll näher auf die Tragesystem-Befestigungsschnittstelle eingegangen werden.

Die Tragesystem-Befestigungsschnittstelle ermöglicht insbesondere eine werkzeuglose Abnahme des textilen Tragesystems vom Hauptabschnitt und zweckmäßigerweise eine anschließende werkzeuglose Anbringung des zuvor abgenommenen textilen Tragesystems oder eines anderen textilen Tragesystems an den Hauptabschnitt. Insbesondere ermöglicht die Tragesystem-Befestigungsschnittstelle eine komplette Abnahme des textilen Tragesystems vom Hauptabschnitt, so dass das textile Tragesystem komplett vom Hauptabschnitt, insbesondere vom Exoskelett 20, getrennt ist.

Die Tragesystem-Befestigungsschnittstelle ist vorzugsweise als Schnellwechselsystem ausgeführt. Mittels der Tragesystem-Befestigungsschnittstelle kann das textile Tragesystem, insbesondere die textilen Komponenten, vom Exoskelett 20 abgenommen werden, beispielsweise um es dann im abgenommenen Zustand zu waschen, beispielsweise in einem Industrie- oder Handwerksumfeld integriert in einem bestehenden Reinigungsablauf für Arbeitskleidung.

Die Hardware des Exoskeletts 20 ohne die textilen Komponenten, insbesondere ohne das textile Tragesystem, soll auch als Exoskelett-Hauptteil bezeichnet werden. Der Exoskelett-Hauptteil umfasst den Hauptabschnitt, jede Schultergelenkanordnung 9 und jeden Unterstützungsabschnitt 3. Durch die Trennung des textilen Tragesystems, insbesondere der textilen Komponenten, von dem Exoskelett-Hauptteil, insbesondere von dem Hauptabschnitt, wird es möglich, dass mehrere Anwender hintereinander auf denselben Exoskelett-Hauptteil zugreifen, wobei jeder Anwender ein personalisiertes textiles Tragesystem, beispielsweise sein eigenes textiles Tragesystem, und/oder ein frisch gewaschenes textiles Tragesystem zusammen mit dem Exoskelett-Hauptteil verwenden kann.

Exemplarisch besteht das textile Tragesystem aus dem Rückentextilabschnitt 401, dem Schultergurtabschnitt und dem Beckengurtabschnitt.

Zweckmäßigerweise bilden der Rückentextilabschnitt 401, der Schultergurtabschnitt und der Beckengurtabschnitt eine Einheit - das textile Tragesystem - die mit wenigen manuellen Betätigungen der Tragesystem-Befestigungsschnittstelle, beispielsweise weniger als zehn manuellen Betätigungen, vom Exoskelett-Hauptteil gelöst und abgenommen werden kann.

Die Tragesystem-Befestigungsschnittstelle umfasst zweckmäßigerweise wenigstens zwei verteilt angeordnete und/oder unabhängig voneinander lösbare Befestigungseinrichtungen, exemplarisch eine Sicherheits-Befestigungseinrichtung 406, eine Zusatz-Befestigungseinrichtung und eine Gelenk-Befestigungseinrichtung. Insbesondere müssen mehrere oder sämtliche der Befestigungseinrichtungen gelöst werden, um das textile Tragesystem vom Exoskelett-Hauptteil abnehmen zu können.

Exemplarisch ist das textile Tragesystem über die Tragesystem-Befestigungsschnittstelle an verschiedenen Befestigungsstellen am Hauptabschnitt, insbesondere am Rückenteil 8 und/oder am Kraftübertragungselement 18, befestigt. Exemplarisch ist der Rückentextilabschnitt 401 an der oberen Befestigungsstelle 404 über die Sicherheits-Befestigungseinrichtung 406 am Rückenteil 8 befestigt und ist an der unteren Befestigungsstelle 405 über die Zusatz-Befestigungseinrichtung am Rückenteil 8 befestigt. Exemplarisch ist der Beckengurtabschnitt an einer unterhalb der unteren Befestigungsstelle 405 angeordneten Gelenk-Befestigungsstelle über die Gelenk-Befestigungseinrichtung am Kraftübertragungselement 18 befestigt.

Bei dem textilen Tragesystem befinden sich die Befestigungsstellen zur Befestigung an dem Hauptabschnitt zweckmäßigerweise an einer Oberkante und/oder Unterkante des Rückentextilabschnitts 401, insbesondere des Rückennetzes 21, und/oder einer Rückseite des Beckengurtabschnitts, insbesondere des Beckengurts 16.

Im Folgenden soll näher auf die Sicherheits-Befestigungseinrichtung 406 eingegangen werden.

Über die Sicherheits-Befestigungseinrichtung 406 ist das textile Tragesystem, insbesondere der Rückentextilabschnitt 401, an dem Hauptabschnitt, insbesondere am Rückenteil 8, befestigt. Zum Lösen der Sicherheits-Befestigungseinrichtung 406 sind wenigstens zwei aufeinanderfolgende, sich voneinander unterscheidende Löse-Betätigungen der Sicherheits-Befestigungseinrichtung 406 erforderlich.

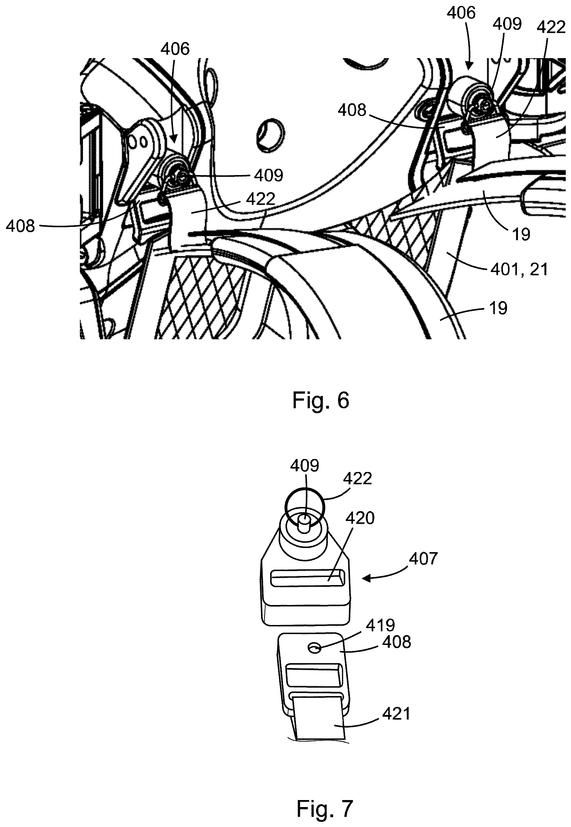

Eine exemplarische Ausgestaltung der Sicherheits-Befestigungseinrichtung 406 ist in den Figuren 6 und 7 zu sehen.

Exemplarisch verfügt die Sicherheits-Befestigungseinrichtung 406 über eine Laschenaufnahme 407, eine in die Laschenaufnahme 407 eingesetzte Befestigungslasche 408 und einen in die Befestigungslasche 408 eingesetzten Befestigungsbolzen 409. Die Laschenaufnahme 407 und der Befestigungsbolzen 409 sind zweckmäßigerweise am Rückenteil 8 angeordnet. Zum Lösen der Sicherheits-Befestigungseinrichtung 406 ist als erste Löse-Betätigung ein Herausziehen des Befestigungsbolzens 409 aus der Befestigungslasche 408 erforderlich. Als zweite Löse-Betätigung ist zweckmäßigerweise ein Herausziehen der Befestigungslasche 408 aus der Laschenaufnahme 407 erforderlich.

Die Laschenaufnahme 407 verfügt über einen Aufnahmeraum zur Aufnahme der Befestigungslasche 408. Der Aufnahmeraum ist zweckmäßigerweise derart orientiert, dass sich die Befestigungslasche 408 in einem vom Anwender getragenen Zustand des Exoskeletts und bei einem aus der Befestigungslasche 408 herausgezogenen Befestigungsbolzen 409 nicht von selbst, beispielsweise aufgrund der Gewichtskraft des Rückenteils 8 und/oder der Befestigungslasche 408, aus der Laschenaufnahme 407 bewegt. Beispielsweise ist die Laschenaufnahme 407 mit ihrem Aufnahmeraum nach hinten und/oder nach oben orientiert, so dass die Befestigungslasche 408 (relativ zum Rückenteil 8) in eine Löse-Richtung nach vorne und/oder nach unten gezogen werden muss, um die Befestigungslasche 408 aus der Laschenaufnahme 407 zu bewegen. Zweckmäßigerweise ist die Befestigungslasche 408 im getragenen Zustand des Exoskeletts 20 in Löse-Richtung blockiert, beispielsweise vom Exoskelett 20 und/oder vom Anwender.

Exemplarisch verfügt die Sicherheits-Befestigungseinrichtung 406 über zwei Sicherheits-Befestigungseinheiten, wobei jede Sicherheits-Befestigungseinheit eine jeweilige Laschenaufnahme 407, eine jeweilige Befestigungslasche 408 und/oder einen jeweiligen Befestigungsbolzen 409 aufweist, die zweckmäßigerweise wie vorstehend und/oder nachstehend erläutert ausgeführt sind und/oder wie vorstehend und/oder nachstehend erläutert miteinander interagieren. Eine der Sicherheits-Befestigungseinheiten ist im oberen rechten Bereich des Rückenteils 8 angeordnet und die andere Sicherheits-Befestigungseinheit im oberen linken Bereich des Rückenteils. Die Sicherheits-Befestigungseinrichtung 406, insbesondere die beiden Sicherheits-Befestigungseinheiten, sind zweckmäßigerweise an der oberen Befestigungsstelle 404, insbesondere auf Höhe der Schultergelenkanordnung 9, angeordnet.

Zweckmäßigerweise ist jede Sicherheits-Befestigungseinheit 406 so am Rückenteil 8 positioniert, dass sich jede Befestigungslasche 408 im getragenen Zustand des Exoskeletts 20 etwa auf Höhe des Halswirbels C7 des Anwenders befindet. Auf diese Weise kann sichergestellt werden, dass die Schultergurte 19 ausreichend seitlichen Spielraum haben, um sowohl von Anwendern mit breiten und schmalen Schultern getragen werden zu können.

Zum Lösen der Sicherheits-Befestigungseinrichtung 406 sind zweckmäßigerweise zwei verschiedene Löse-Betätigungen - exemplarisch die vorstehend erläuterte erste Lösebetätigung und die zweite Löse-Betätigung - pro Sicherheits-Befestigungseinheit erforderlich.

Die Figur 7 zeigt eine exemplarische Ausgestaltung einer solchen, insbesondere jeder, Sicherheits-Befestigungseinheit 406. Die Befestigungslasche 408 ist exemplarisch über einen Verbindungabschnitt 421, beispielsweise ein Verbindungstextil, an dem Rückentextilabschnitt 401 befestigt. Die Befestigungslasche 408 umfasst eine Bolzen-Öffnung 419, in die der Befestigungsbolzen 409 zur Verriegelung der Befestigungslasche 408 in der Laschenaufnahme 407 einsetzbar ist. Die Laschenaufnahme 407 verfügt über einen Aufnahmeschlitz 420, in den die Befestigungslasche 408 einsetzbar ist. Die an dem Rückenteil 8 angeordnete Sicherheits-Befestigungseinheit 406 umfasst zweckmäßigerweise eine Feder, mit der der Befestigungsbolzen 409 vorgespannt ist, so dass er ohne die erste Löse-Betätigung in der Bolzen-Öffnung 419 eingesetzt bleibt. Die Befestigungslaschen 408 sind vorzugsweise aus Kunststoff gefertigt. Bevorzugt greift der Befestigungsbolzen 409 durch die Befestigungslasche 408 hindurch und wird insbesondere auf beiden Seiten der Befestigungslasche 408 in der Laschenaufnahme 407 gehalten. Zweckmäßigerweise ist an jedem Befestigungsbolzen 409 ein jeweiliges Zugelement 422, beispielsweise ein Zugring und/oder eine Zugfahne, angebracht, das der Anwender greifen kann, um den Befestigungsbolzen 409 aus der Bolzen-Öffnung 419 zu ziehen.

Das textile Tragesystem ist an der Oberseite des Rückennetzes 21 mittels der Befestigungslaschen 408 mit dem Rückenteil 8 verbunden. Jede Befestigungslasche 408 ist dazu in einen jeweiligen Aufnahmeschlitz 420 eingesteckt und von oben mit einem jeweiligen Befestigungsbolzen 409, der sich durch die in den Aufnahmeschlitz 420 eingesteckte Befestigungslasche 408 erstreckt, gesichert. Zum Lösen der jeweiligen Befestigungslasche 408 wird der Befestigungsbolzen 409 (entgegen einer Federvorspannung, die den Befestigungsbolzen 409 in der arretierten Position hält) an einem Zugelement 422 so weit aus der Bolzen-Öffnung 419 gezogen, dass die Befestigungslasche 408 aus dem Aufnahmeschlitz 420 gezogen werden kann.

Zweckmäßigerweise ist zum Schließen der Sicherheits-Befestigungseinrichtung 406 eine Schließ-Betätigung erforderlich, bei der die Befestigungslasche 408 in die Laschenaufnahme 407 geschoben wird und sich dadurch der Befestigungsbolzen 409 automatisch in die Befestigungslasche 408 bewegt.

Vorzugsweise kann jede Sicherheits-Befestigungseinheit 406 mit nur einer Hand geschlossen werden, da der Befestigungsbolzen 409 federvorgespannt ist, und die Befestigungslasche 408 durch ihre Form beim Einschieben in den Aufnahmeschlitz 420 den Befestigungsbolzen 409 zunächst entgegen der Federvorspannung verdrängt, insbesondere in Richtung senkrecht zur Einschiebe-Richtung, bis die Bolzen-Öffnung 419 an dem Befestigungsbolzen 409 positioniert ist, so dass der Befestigungsbolzen 409 aufgrund der Federvorspannung in die Bolzen-Öffnung 419 schnappt.

Bevorzugt umfasst die Tragesystem-Befestigungsschnittstelle die Zusatz-Befestigungseinrichtung mit wenigstens einem Haken 410 und/oder einem Hebelverschluss. Die Zusatz-Befestigungseinrichtung, insbesondere der wenigstens eine Haken 410 und/oder Hebelverschluss, ist zweckmäßigerweise an der unteren Befestigungsstelle 405 angeordnet.

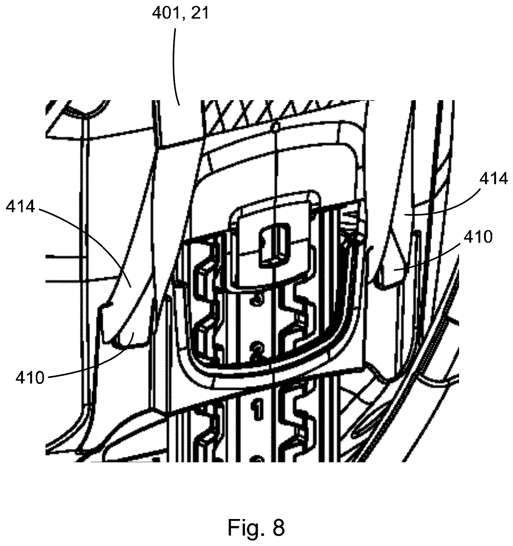

Eine exemplarische Ausgestaltung der Zusatz-Befestigungseinrichtung ist in der Figur 8 gezeigt. Exemplarisch umfasst die Zusatz-Befestigungseinrichtung zwei Haken 410, die am Rückenteil 8, insbesondere in Breitenrichtung verteilt und/oder beabstandet, angeordnet sind. Die Haken 410 sind exemplarisch vertikal nach unten ausgerichtet. Der Rückentextilabschnitt 401 ist mit seinen Schlaufen 414 in die Haken 410 eingehakt.

Optional kann die Zusatz-Befestigungseinrichtung einen oder mehrere Hebelverschlüsse aufweisen. Jeder Hebelverschluss verfügt zweckmäßigerweise über ein vom Anwender betätigbares Hebelelement, über dessen Betätigung der Rückentextilabschnitt, insbesondere das Rückennetz, gespannt werden kann, insbesondere in Längsrichtung. Jeder Hebelverschluss verfügt zweckmäßigerweise über einen Totpunkt für das jeweilige Hebelelement, so dass das Hebelelement nach Überschreiten des Totpunkts in seiner Stellung gehalten wird.

Optional kann die Zusatz-Befestigungseinrichtung ein Öse oder ein Loch aufweisen.

Die Tragesystem-Befestigungsschnittstelle verfügt zweckmäßigerweise ferner über die Gelenk-Befestigungseinrichtung, die über einen ersten, dem textilen Tragesystem zugehörigen Gelenkabschnitt 305, und über einen zweiten, dem Hauptabschnitt zugehörigen Gelenkabschnitt 306 verfügt, wobei der erste Gelenkabschnitt 305 und der zweite Gelenkabschnitt 306 ein Gelenk, insbesondere das Kraftübertragungselement-Gelenk 17, zwischen dem textilen Tragesystem, insbesondere dem Beckengurtabschnitt, und dem Hauptabschnitt, insbesondere dem Kraftübertragungselement 18, bilden und der erste Gelenkabschnitt 305 vom zweiten Gelenkabschnitt 306 abnehmbar ist, um die Gelenk-Befestigungseinrichtung zu lösen. Exemplarisch verfügt die Gelenk-Befestigungseinrichtung über ein Betätigungselement 313, insbesondere einen Betätigungshebel, über dessen Betätigung der erste Gelenkabschnitt 305 von dem zweiten Gelenkabschnitt 306 abnehmbar ist.

Das Kraftübertragungselement-Gelenk 17 verbindet das insbesondere leistenförmige Kraftübertragungselement 18 mit dem Beckengurtabschnitt und stellt zweckmäßigerweise einen oder mehrere translatorische und/oder rotatorische Freiheitsgrade zwischen dem Kraftübertragungselement 18 und dem Beckengurtabschnitt bereit. Vorzugsweise ist das Kraftübertragungselement-Gelenk 17 als Kugelgelenk ausgeführt und/oder stellt drei rotarische Freiheitsgrade zwischen dem Kraftübertragungselement 18 und dem Beckengurtabschnitt bereit. Das Kraftübertragungselement-Gelenk 17 ist zweckmäßigerweise das einzige Gelenk am Beckengurtabschnitt und/oder die einzige Gelenkverbindung zum Beckengurtabschnitt und/oder die einzige Gelenkverbindung zwischen dem Beckengurtabschnitt und dem Kraftübertragungselement 18.

Der eine Freiheitsgrad oder die mehreren Freiheitsgrade werden insbesondere zwischen dem ersten Gelenkabschnitt 305 und dem zweiten Gelenkabschnitt 306 bereitgestellt. Beispielsweise ist der erste Gelenkabschnitt 305 ein Teil, insbesondere ein unterer Teil, des Kraftübertragungselements 18.

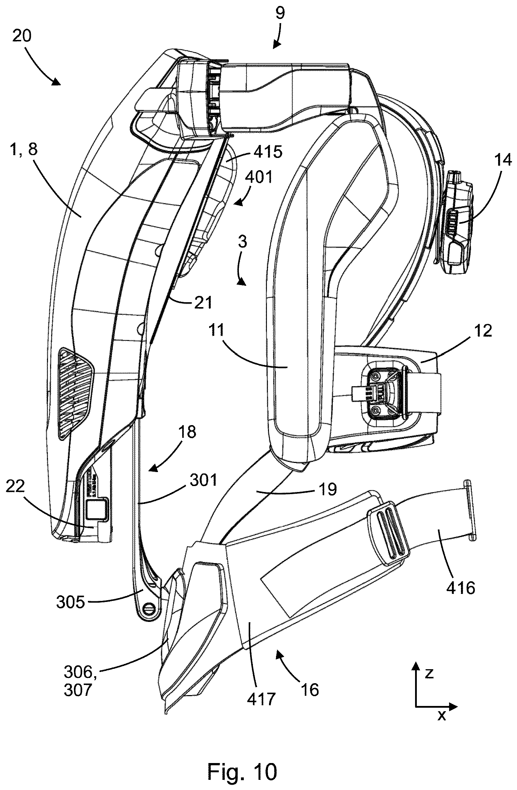

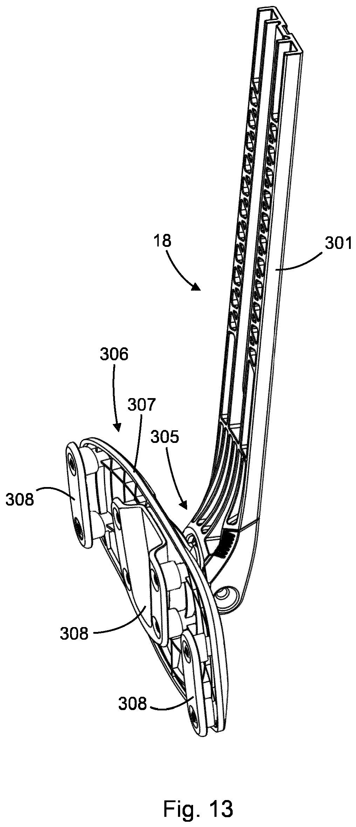

Der zweite Gelenkabschnitt 306 ist exemplarisch an dem Beckengurt 16 befestigt, wie dies z.B. in der Figur 10 gezeigt ist. Exemplarisch umfasst der zweite Gelenkabschnitt 306 einen äußeren Befestigungsabschnitt 307, der insbesondere als äußere Befestigungsplatte ausgeführt ist, wie dies z.B. in der Figur 13 gezeigt ist. Zweckmäßigerweise umfasst der zweite Gelenkabschnitt 306 ferner wenigstens einen inneren Befestigungsabschnitt 308, der beispielsweise wenigstens eine innere Befestigungsplatte umfasst.

Der äußere Befestigungsabschnitt 307 und der innere Befestigungsabschnitt 308 dienen zweckmäßigerweise zur Einleitung einer von dem Kraftübertragungselement 18 übertragenen Kraft in den Beckengurt 16. Zweckmäßigerweise erstreckt sich der äußere Befestigungsabschnitt 307 und/oder der innere Befestigungsabschnitt 308 in z-Richtung über wenigstens die Hälfte der z-Erstreckung des Beckengurts 16. Exemplarisch beträgt die y-Erstreckung des äußeren Befestigungsabschnitts 307 und/oder des inneren Befestigungsabschnitts 308 zwischen 15 und 20 cm.

In der Figur 13 ist aus Gründen der besseren Darstellbarkeit der Beckengurt 16 nicht gezeigt.

Bevorzugt liegt der äußere Befestigungsabschnitt 307 außen - also insbesondere auf der vom Anwender abgewandten Seite - am Beckengurt 16 an, und der innere Befestigungsabschnitt 308 liegt bevorzugt innen - also insbesondere auf der dem Anwender zugewandten Seite - am Beckengurt 16 an. Der äußere Befestigungsabschnitt 307 und der innere Befestigungsabschnitt 308 sind zweckmäßigerweise aneinander befestigt, insbesondere durch eine oder mehrere Schrauben, die beispielsweise durch den Beckengurt 16 verlaufen.

Das Kraftübertragungselement-Gelenk 17 ist insbesondere als Kugelgelenk ausgeführt.

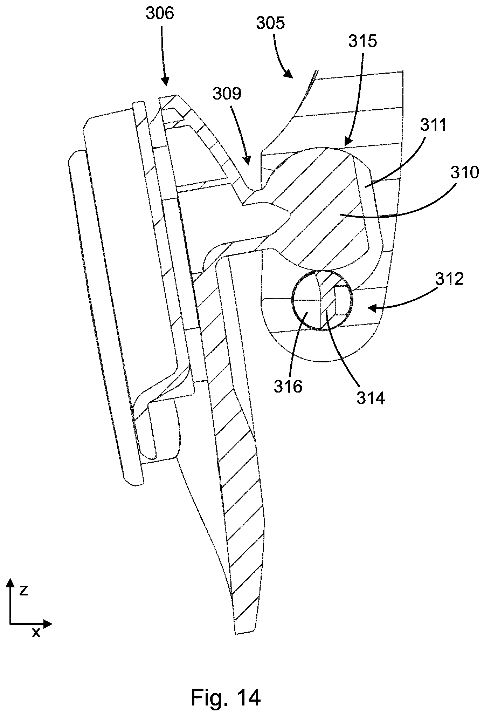

Bevorzugt umfasst das Kraftübertragungselement-Gelenk 17 einen Kugelabschnitt 309, der exemplarisch Teil des zweiten Gelenkabschnitts 306 ist und insbesondere an dem äußeren Befestigungsabschnitt 307 angebracht ist. Der Kugelabschnitt 309 ist in der Figur 14 gezeigt. Beispielsweise ragt der Kugelabschnitt 309 von dem vorzugsweise plattenförmig ausgeführten äußeren Befestigungsabschnitt 307 nach hinten ab, exemplarisch in (insbesondere negativer) x-Richtung. Der Kugelabschnitt 309 weist einen Kugelkopf 310 auf.

Exemplarisch besteht der Kugelkopf aus einem Kunststoff, beispielsweise aus glasfaserverstärktem Polyamid, insbesondere Schulamid 6 GF30.

Bevorzugt ist der Kugelkopf 310 abgeflacht ausgeführt. Insbesondere hat der Kugelkopf 310 die Form einer abgeflachten Kugel. Insbesondere ist die von dem Beckengurt 16 abgewandte Seite des Kugelkopfes 310 abgeflacht. Beispielsweise hat der Kugelkopf 310 die Form einer Kugel, von der ein Teil in vertikaler Ebene abgeschnitten wurde. Der abgeflachte Kugelkopf stellt vorzugsweise eine kompaktere Gelenkanordnung bereit. Der abgeflachte Kugelkopf ermöglicht insbesondere einer Reduktion des infolge der Krafteinleitung aus dem ersten Gelenkabschnitt 305 auf den zweiten Gelenkabschnitt 306 wirkenden Hebelarms.

Zweckmäßigerweise umfasst das Kraftübertragungselement-Gelenk 17 ferner eine Kugelkopf-Aufnahme 311, die den Kugelkopf 310 aufnimmt, und insbesondere Teil des ersten Gelenkabschnitts 305 ist.

Die Kugelkopf-Aufnahme 311 ist vorzugsweise aus Metall gefertigt. Zweckmäßigerweise ist der Kugelkopfabschnitt 309 vom Exoskelett 20 abnehmbar, insbesondere zusammen mit dem äußeren Befestigungsabschnitt 307, beispielsweise durch Lösen entsprechender Schrauben und durch Entriegeln des nachstehend erläuterten Verriegelungsmechanismus 312, und dann austauschbar, beispielsweise bei Verschleiß des Kugelkopfs 310.

Gemäß einer alternativen Ausgestaltung ist der Kugelabschnitt 309 Teil des ersten Gelenkabschnitts 305 und die Kugelkopf-Aufnahme 311 ist Teil des zweiten Gelenkabschnitts 306.

Der zweite Gelenkabschnitt 306 ist insbesondere werkzeuglos vom ersten Gelenkabschnitt 305 abnehmbar, beispielsweise um den Beckengurt 16 (insbesondere zusammen mit dem zweiten Gelenkabschnitt 305) vom Rückenteil 8 und/oder vom steifen Kraftübertragungselement 18 abzunehmen.

Bevorzugt umfasst das Exoskelett 20 einen Verriegelungsmechanismus 312 zur Verriegelung des zweiten Gelenkabschnitts 306 an dem ersten Gelenkabschnitt 305. Der Verriegelungsmechanismus 312 verfügt exemplarisch über das manuell betätigbare Betätigungselement 313, über dessen Betätigung die Verriegelung lösbar ist. Vorzugsweise ist der Verriegelungsmechanismus 312 ein rein mechanischer Verriegelungsmechanismus.

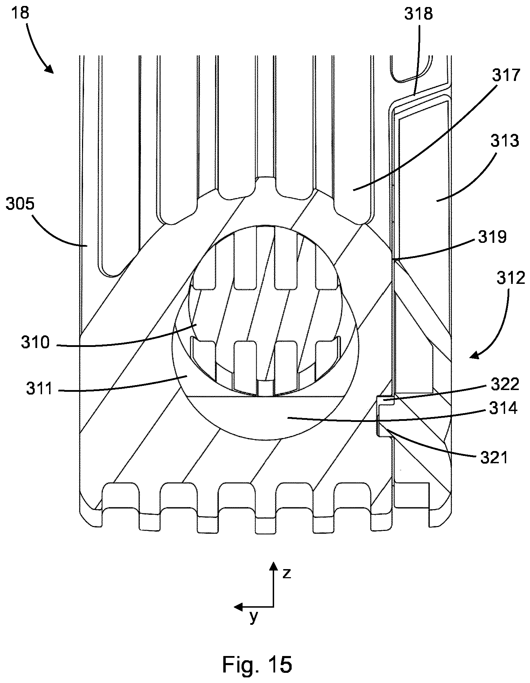

Die Figuren 14 und 15 zeigen eine exemplarische Ausgestaltung des Verriegelungsmechanismus 312. Die Figur 14 zeigt einen Schnitt durch eine x-z-Ebene und die Figur 15 zeigt einen Schnitt durch eine y-z-Ebene. Die Schnitte verlaufen jeweils durch den Kugelkopf 310.

Zweckmäßigerweise dient der Verriegelungsmechanismus 312 dazu, den Kugelkopf 310 wahlweise in der Kugelkopf-Aufnahme 311 zu verriegeln, so dass der Kugelkopf 310 nicht aus der Kugelkopf-Aufnahme 311 entnommen werden kann, oder den Kugelkopf 310 relativ zur Kugelkopf-Aufnahme 311 freizugeben, sodass der Kugelkopf 310 aus der Kugelkopf-Aufnahme 311 entnommen werden kann. Der Verriegelungsmechanismus 312 ist vorzugsweise ohne Zuhilfenahme von Werkzeug betätigbar.

Exemplarisch verfügt der Verriegelungsmechanismus über ein Verriegelungsteil 314, das zweckmäßigerweise mechanisch mit dem Betätigungselement 313 verbunden ist und insbesondere über das Betätigungselement 313 bewegt werden kann, um das Verriegelungsteil 314 wahlweise in eine Verriegelungsstellung oder in eine Freigabestellung zu versetzen. In der Verriegelungsstellung hält das Verriegelungsteil 314 den Kugelkopf 310 zumindest teilweise in einer Verriegelungsvertiefung 315, wodurch der Kugelkopf 310 in der Kugelkopf-Aufnahme 311 verriegelt wird. Exemplarisch ist die Verriegelungsvertiefung 315 oberhalb des Kugelkopf 310 angeordnet und/oder das Verriegelungsteil 314 ist zweckmäßigerweise unterhalb des Kugelkopfs 310 angeordnet.

Exemplarisch ist das Verriegelungsteil 314 über das Betätigungselement 313 um eine insbesondere parallel zur y-Richtung verlaufende Drehachse rotierbar, um das Verriegelungsteil 314 durch Rotation wahlweise in die Verriegelungsstellung oder die Freigabestellung zu versetzen.

Das Verriegelungsteil 314 umfasst zweckmäßigerweise eine Freigabeaussparung 316, die in der Freigabestellung dem Kugelkopf 310 zugewandt ist, so dass der Kugelkopf 310 durch Bewegung in einen durch die Freigabeaussparung 316 freigegebenen Raum die Verriegelungsvertiefung 315 verlassen kann. In der Verriegelungsstellung ist die Freigabeaussparung 316 dem Kugelkopf 310 nicht zugewandt.

Das Betätigungselement 313 ist vorzugsweise als Bedienhebel ausgeführt und insbesondere um eine parallel zur y-Richtung verlaufende Drehachse rotierbar, beispielsweise durch den Anwender, um das Verriegelungsteil 314 wahlweise in die Verriegelungsstellung oder die Freigabestellung zu versetzen. Beispielsweise ist eine Rotation um 90 Grad erforderlich, um das Verriegelungsteil 314 von der Verriegelungsstellung in die Freigabestellung zu versetzen.

Exemplarisch ist das Betätigungselement 313 Teil des ersten Gelenkabschnitts 305, insbesondere Teil des Kraftübertragungselements 18. Das Betätigungselement 313 ist insbesondere an einem (in Breitenrichtung) seitlichen Rand des Kraftübertragungselements 18 angeordnet. Insbesondere ist das Betätigungselement 313 derart in das Kraftübertragungselement 18 integriert, dass das Betätigungselement 313 eine (in Breitenrichtung) seitliche Außenkontur des Kraftübertragungselements 18 kontinuierlich fortführt. Der Teil des Kraftübertragungselements 18 ohne das Betätigungselement 313 soll auch als Kraftübertragungselement-Körper 317 bezeichnet werden. Das Kraftübertragungselement 18 umfasst den Kraftübertragungselement-Körper 317 und das Betätigungselement 313. Im Kraftübertragungselement-Körper ist eine Aussparung vorhanden, insbesondere am (in Breitenrichtung) seitlichen Rand, in der das Betätigungselement 313 angeordnet ist. Die Aussparung hat zweckmäßigerweise die gleiche Größe wie das Betätigungselement 313 und nimmt das Betätigungselement 313 vollständig auf. Von oben kommend entlang der seitlichen Außenkontur des Kraftübertragungselement-Körpers 317 wird die Aussparung durch eine Stufe 318 in der seitlichen Außenkontur nach innen in Richtung hin zum Zentrum (in Breitenrichtung) des Kraftübertragungselements 18 und einen darauf folgenden vertikal nach unten verlaufenden Abschnitt 319 der seitlichen Außenkontur des Kraftübertragungselement-Körpers 317 gebildet.

Bevorzugt sind zwei verschiedene, aufeinanderfolgende Betätigungsbewegungen des Betätigungselements 313 erforderlich, um die Verriegelung zu lösen.

Exemplarisch ist das Betätigungselement 313 wahlweise in einen Sicherungszustand oder einen Betätigungszustand versetzbar, insbesondere durch den Anwender, und kann zweckmäßigerweise nur in dem Betätigungszustand in die Freigabestellung versetzt werden, und insbesondere nicht im Sicherungszustand. Insbesondere ist eine erste Betätigungsbewegung des Betätigungselements 313, beispielsweise ein Ziehen des Betätigungselements 313 in Breitenrichtung seitlich nach außen, erforderlich, um das Betätigungselement 313 von dem Sicherungszustand in den Betätigungszustand zu versetzten, und darauf folgend ist eine zweite Betätigungsbewegung, insbesondere eine Rotation um eine parallel zur y-Richtung verlaufende Drehachse, des Betätigungselements 313 erforderlich, um das Betätigungselement 313 im Betätigungszustand von der Verriegelungsstellung in die Freigabestellung zu versetzen.

Exemplarisch verfügt das Betätigungselement 313 über einen ersten Eingriffsabschnitt 321, der im Sicherungszustand mit einem zweiten Eingriffsabschnitt 322 des Kraftübertragungselement-Körpers 317 in Eingriff steht und dadurch verhindert, dass das Betätigungselement 313 in die Freigabestellung versetzt werden kann. Exemplarisch ist der erste Eingriffsabschnitt 321 als insbesondere seitlich abragender Vorsprung und der zweite Eingriffsabschnitt 322 als insbesondere seitliche Vertiefung ausgeführt. Durch ein Ziehen des Betätigungselements 313 in Breitenrichtung seitlich nach außen wird der Eingriff zwischen dem ersten Eingriffsabschnitt 321 und dem zweiten Eingriffsabschnitt 322 aufgelöst, sodass eine Rotation des Betätigungselements 313 um eine parallel zur y-Richtung verlaufende Drehachse ermöglicht wird.

Wie vorstehend erläutert, müssen zum Trennen des textilen Tragesystems vom Exoskelett-Hauptteil drei unterschiedliche Befestigungseinrichtungen - die Sicherheits-Befestigungseinrichtung, die Zusatz-Befestigungseinrichtung und die Gelenk-Befestigungseinrichtung - gelöst werden. Beispielsweise wird zunächst die Sicherheits-Befestigungseinrichtung gelöst, indem jeder Befestigungsbolzen 409 aus der jeweiligen Bolzen-Öffnung 419 gezogen wird. Anschließend wird die Zusatz-Befestigungseinrichtung gelöst, indem jede Schlaufe 414 vom jeweiligen Haken 410 gezogen wird. Schließlich wird die Gelenk-Befestigungseinrichtung durch Betätigung des Betätigungselements 313 und Abnahme des zweiten Gelenkabschnitts 306 vom ersten Gelenkabschnitt 305 gelöst. Das textile Tragesystem kann nun vollständig vom Exoskelett-Hauptteil abgenommen werden.

Das textile Tragesystem wird dann beispielsweise in einer Waschmaschine gewaschen. Zweckmäßigerweise ist das textile Tragesystem maschinenwaschbar.

Zur Anbringung des textilen Tragesystems an das Exoskelett-Hauptteil wird zunächst der Kugelkopf 310 in die Kugelkopf-Aufnahme 311 eingeführt und mittels Betätigung des Betätigungselements 313 in der Kugelkopf-Aufnahme 311 verriegelt. Anschließend wird der Rückentextilabschnitt 401 mit seinen Schlaufen 414 in die Haken 410 des Rückenteils 8 eingehängt und dann mittels der Befestigungslaschen 408 und den Befestigungsbolzen 409 am Rückenteil befestigt.

Optional kann auch zuerst eine Befestigung mittels der Zusatz-Befestigungseinrichtung und der Sicherheits-Befestigungseinrichtung erfolgen, und erst danach eine Befestigung mittels der Gelenk-Befestigungseinrichtung erfolgen.

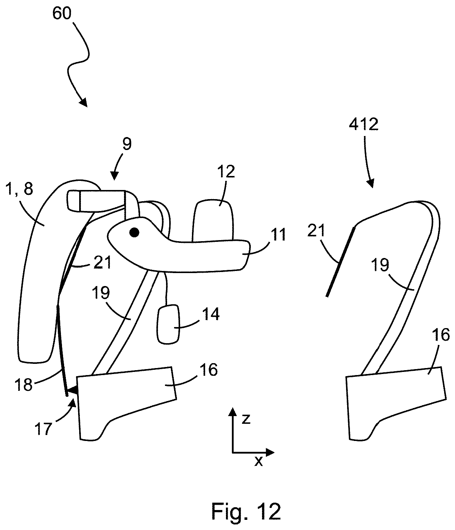

Die Figur 12 zeigt eine Anordnung 60, umfassend das Exoskelett 20, wobei das textile Tragesystem ein erstes textiles Tragesystem ist und die Anordnung 60 ferner ein zweites textiles Tragesystem 412 umfasst. Das erste textile Tragesystem ist durch das zweite textile Tragesystem 412 austauschbar. Vorzugsweise ist das zweite textile Tragesystem 412 wie das erste textile Tragesystem aufgebaut und/oder wie das erste textile Tragesystem an den Hauptabschnitt über die Tragesystem-Befestigungsschnittstelle anbringbar. Insbesondere umfasst das zweite textile Tragesystem einen Rückentextilabschnitt, einen Schultergurtabschnitt und/oder einen Beckengurtabschnitt.

Die Anordnung 60 kann insbesondere mit einem Verfahren betrieben werden, bei dem das erste textile Tragesystems von dem Hauptabschnitt abgenommen wird, insbesondere durch Lösen der Tragesystem-Befestigungsschnittstelle, und dann das zweite textile Tragesystems 412 an den Hauptabschnitt angebracht wird, insbesondere mittels der Tragesystem-Befestigungsschnittstelle.

Optional unterscheidet sich das zweite textile Tragesystem 412 von dem ersten textilen Tragesystem, insbesondere in seiner Größe und/oder Polsterung und/oder Material.

Zweckmäßigerweise ist beim textilen Tragesystem eine oder mehrere Gurtlängen einstellbar, beispielsweise eine Länge jedes Schultergurts 19 und/oder eine Länge des Beckengurts 16. Zweckmäßigerweise können mehrere Anwender den Exoskelett-Hauptteil nacheinander verwenden und dabei jeweils ihr eigenes, mit entsprechend personalisierten Gurtlängen und/oder anderen personalisierten Einstellungen versehenes textiles Tragesystem verwenden. Beispielsweise ist beim ersten textilen Tragesystem eine oder mehrere Gurtlängen anders eingestellt als beim zweiten textilen Tragesystem 412.

Vorzugsweise kann das textile Tragesystem eine insbesondere anwenderspezifische Information aufweisen, die beispielsweise als Markierung außen an dem textilen Tragesystem angeordnet ist, und/oder auf einem Chip im textilen Tragesystem gespeichert ist. Die Information kann beispielsweise eine Identifikation, insbesondere einen Namen, des Anwenders und/oder einer Abteilung umfassen und/oder eine Zugangsberechtigung. Die Information ist insbesondere an einer von außen sichtbaren Stelle angeordnet, beispielsweise an einem Schultergurt. Beispielsweise umfasst das erste textile Tragesystem eine andere Information als das zweite textile Tragesystem.

Optional sind das erste textile Tragesystem und das zweite textile Tragesystem 412 für verschiedene Anwender und/oder Nutzungskontexte ausgelegt. Beispielsweise ist das erste textile Tragesystem für eine Nutzung bei höheren Temperaturen und/oder im Sommer ausgelegt, und/oder das zweite textile Tragesystem 412 ist für eine Nutzung bei tieferen Temperaturen und/oder im Winter ausgelegt. Beispielsweise ist das erste textile Tragesystem mit einer höheren Wärmeisolation ausgeführt als das zweite textile Tragesystem. Optional kann das erste textile Tragesystem eine Lüftungseinheit und/oder Kühlungseinheit aufweisen und/oder das zweite textile Tragesystem 412 eine Heizungseinheit. Bevorzugt können das erste und das zweite textile Tragesystem jeweils an eine bestimmte Körperform angepasst sein. Beispielsweise ist das erste textile Tragesystem an eine männliche Körperform und/oder das zweite textile Tragesystem an eine weibliche Körperform angepasst.

Beispielsweise ist das erste textile Tragesystem verschlissen und wird durch das nicht verschlissene zweite Tragesystem ersetzt.

Bevorzugt ist der Rückentextilabschnitt 401 derart an dem Hauptabschnitt befestigt, dass der Hauptabschnitt in seiner Länge einstellbar, insbesondere an eine Oberkörpergröße des Anwenders anpassbar, ist, insbesondere ohne Abnahme des Rückentextilabschnitts 401 vom Hauptabschnitt. Exemplarisch ist der Rückentextilabschnitt 401 am Rückenteil 8, insbesondere ausschließlich am Rückenteil 8, und insbesondere nicht am Kraftübertragungselement 18, befestigt. Die Länge des Hauptabschnitts ist insbesondere durch Verstellung des Kraftübertragungselements 18 relativ zum Rückenteil 8 einstellbar, und zwar vorzugsweise unabhängig vom (nur am Rückenteil 8 befestigten) Rücktextilabschnitt 401.

Optional ist die Länge des Rückentextilabschnitts an eine Oberkörpergröße des Anwenders anpassbar, insbesondere indem ein Abstand zwischen der oberen Befestigungsstelle, an der der Rückentextilabschnitt am Hauptabschnitt befestigt ist und einer/der unteren Befestigungsstelle, an der der Rückentextilabschnitt am Hauptabschnitt befestigt ist, verstellbar ist, insbesondere durch eine Anpassung der Länge des Hauptabschnitts. In diesem Fall ist zweckmäßigerweise die obere Befestigungsstelle am Rückenteil angeordnet und die untere Befestigungsstelle ist am Kraftübertragungselement angeordnet. Die Länge des Rückentextilabschnitts ist durch Verstellung des Kraftübertragungselements 18 relativ zum Rückenteil einstellbar, wodurch zweckmäßigerweise auch die Länge des Hauptabschnitts eingestellt wird.

Optional verfügt das Exoskelett 20 über ein farbliches Leitsystem, welches Interaktionspunkte, insbesondere der Tragesystem-Befestigungsschnittstelle, und/oder Einstellungsmöglichkeiten für den Anwender hervorhebt und verdeutlicht. Beispielsweise sind als Zugelemente 422 der Befestigungsbolzen 409 farbige Fähnchen vorhanden, welche einerseits die Grifffläche vergrößern und andererseits den Anwender durch eine Hinweis-Farbe auf die Interaktionsmöglichkeit hinweisen. Optional können die Schlaufen 414 und/oder das Betätigungselement 313 die Hinweis-Farbe aufweisen.

Optional können Poka-Yoke-Mechanismen vorgesehen werden, die einen falschen Einbau verhindern.

Optional verfügt das textile Tragesystem über einen Tragegriff an der Oberseite, mit dem das Exoskelett 20 mit einer Hand gehoben und getragen werden kann.

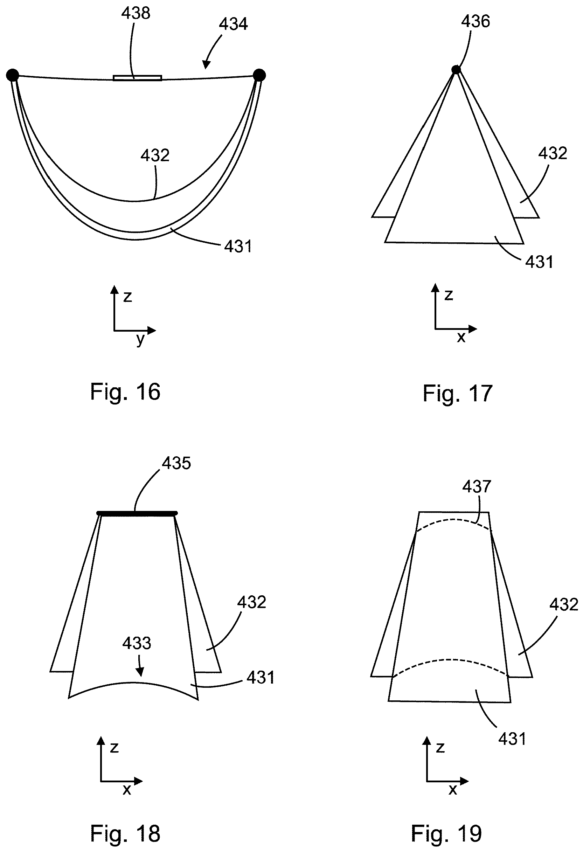

Im Folgenden soll unter Bezugnahme auf die Figuren 16 bis 19 näher auf die Armbefestigungen 12 eingegangen werden. In den Figuren 16 bis 19 und bei den nachfolgenden Erläuterungen wird davon ausgegangen, dass der Unterstützungsabschnitt 3, insbesondere die Unterstützungsabschnitt-Achse 61, parallel zur x-Richtung ausgerichtet ist und die Armbefestigung 12 entsprechend im Raum ausgerichtet ist.

Bevorzugt umfasst jede Armbefestigung 12 eine insbesondere als rigides Bauteil ausgeführte Armschale 431 und eine in der Armschale 431 angeordnete textile Armaufnahme 432. Zweckmäßigerweise umfasst jede Armbefestigung 12 ein Verschlussband 434 mit einem Verschluss 438 zum Verschließen der jeweiligen Armbefestigung 12.

Im getragenen Zustand des Exoskeletts 20 wird der Arm, insbesondere der Oberarm, des Anwenders zumindest teilweise von der textilen Armaufnahme 431 aufgenommen, insbesondere zumindest teilweise umschlossen. Zweckmäßigerweise werden über die textile Armaufnahme 432 Kräfte aus dem Oberarm in das Exoskelett 20, insbesondere den Unterstützungsabschnitt 3, abgeleitet. Insbesondere wird die von dem Exoskelett 20, insbesondere durch den Armteil 11, bereitgestellte Unterstützungskraft über die textile Armaufnahme 432 in den Arm, insbesondere den Oberarm, eingeleitet, insbesondere flächig eingeleitet.

Die textile Armaufnahme 432 ist an zwei gegenüberliegenden Bereichen der Armschale 431 befestigt, so dass die textile Armaufnahme zweckmäßigerweise wie eine Hängematte zwischen den beiden Befestigungsenden der Armschale 431 hängt. Exemplarisch ist die textile Armaufnahme 432 an zwei gegenüberliegenden oberen Enden der Armschale 431 befestigt und hängt zweckmäßigerweise zwischen den beiden oberen Enden nach unten durch, so dass die textile Armaufnahme in einem y-z-Schnitt beispielsweise eine U-Form aufweist.

Die Armschale 431 ist insbesondere als zylindrische Halbschale ausgeführt, die in einer Ebene quer zum Arm, insbesondere in einer y-z-Ebene, einen U-Querschnitt aufweisen kann, wie dies in der Figur 16 gezeigt ist. Die Armschale 431 ist formstabil, insbesondere steif, beispielsweise als Hartschale ausgeführt.

Die Armschale 431 dient als Verbindung zwischen der textilen Armaufnahme 431 und dem Armteil 11. Die Verbindung der Armschale 431 mit dem Armteil 11 kann vorzugsweise seitlich (mit der Außenseite der Armschale 431 am Exoskelett 20) oder auf der Oberseite des Armteils 11 positioniert sein. Bevorzugt ist die Armschale 431 über einen Verstellmechanismus an das Armteil 11 angebunden, mit dem der Anwender die Position der Armschale 431 relativ zu seinem Oberarm einstellen kann, beispielsweise auf eine für ihn komfortable Position.

Optional weist die Armschale 431 in einer Ebene längs des Arms, insbesondere einer x-z-Ebene, eine konvexe Oberseite 433 auf, wie dies in der Figur 18 gezeigt ist. Der Vorteil dieser Form ist, dass der Arm mehr Bewegungsfreiheit hat und sich in der Armschale 431 bewegen kann, ohne gedrückt oder geklemmt zu werden.

Die Armschale 431 dient der Aufspannung der textilen Armaufnahme 432, so dass der Oberarm die Armschale 431 nicht oder nicht flächig berührt, und damit eine gute Belüftung des Arms im Kontaktbereich mit der textilen Armaufnahme 432 gewährleistet. Der Arm des Anwenders liegt in der textilen Armaufnahme 432 und wird oberhalb des Bizepses von einem elastischen Verschlussband 434 fixiert.

Die textile Armaufnahme 432 ist wechselbar und kann der Größe des Oberarms angepasst werden, wobei durch den zwischen Armschale 431 und textiler Armaufnahme 432 vorhandenen Spalt Bewegung der textilen Aufnahme 432 sowie eine Luftzirkulation ermöglicht werden.

Da das Material der textilen Armaufnahme 432 konstruktionsbedingt nur Zugkräfte aufnimmt, kann diese dünnwandig und somit schweißdurchlässig gestaltet sein. Im Zusammenhang mit der Luftzirkulation erfolgt so eine Vermeidung von Schweißansammlungen, was den Tragekomfort für den Nutzer wesentlich erhöht.

Das beschriebene Konstruktionsprinzip bietet zahlreiche Variationsparameter zur Anpassung an die konkrete Anwendung. Beispielsweise beeinflussen die Härte der Armschale 431, die Länge der Armaufnahme 432, also die Größe der Kontaktfläche, die Wahl einer länglichen Befestigung 435 (vgl. Fig. 18) oder punktuellen Befestigung (vgl. Fig. 17) der textilen Aufnahme 432 an der Armschale 431 sowie der Abstand zwischen einem unteren Scheitelpunkt der Armschale 431 und der textilen Armaufnahme 432 die Rotationsmöglichkeit, Luftzirkulationsmöglichkeit und die zielgerichtete Krafteinleitung.

Beispielsweise ist eine punktförmigen Befestigung 436 der textilen Armaufnahme 432 an der Armschale 431 gegeben, was beispielsweise eine hohe Rotation zwischen diesen Bauteilen ermöglichen kann (Analogie zur Hängematte). Mit zunehmender linearer Befestigung wird die Rotation begrenzt.

Ferner kann eine längliche Befestigung 435 der textilen Armaufnahme 432 an der Armschale 431 gegeben sein.

Des Weiteren wird durch die Steifigkeit des Systems aus Armschale 431 und textiler Armaufnahme 432 die Dämpfung der Kraftübertragung vom Unterstützungsabschnitt 3 auf den Arm 4 beeinflusst.

Optional hat die textile Armaufnahme 432 in Längsrichtung des Armes - also exemplarisch in x-Richtung - eine konvexe, also in Richtung des Armes gewölbte, Form. Vorzugsweise ist dies durch eine kurvenförmige Aufhängung 437 an der Armschale 431 umgesetzt. Optional kann diese Form dadurch umgesetzt werden, dass die textile Armaufnahme 432 in der Schnittkonstruktion seitlich "aufgesperrt" wird, um so eine gewölbte Passform zu erzielen. Dabei wird an der (in Längsrichtung des Armes gesehenen) vorderen und/oder der hinteren Kante der textilen Armaufnahme 432 eine zur Kante hin zunehmende Mehrweite konstruiert, die zu einer nach außen, vom Arm weg gerichteten Wölbung der textile Armaufnahme 432 führt. Auf diese Weise kann eine Einschnürung des Armes an den Kanten der textilen Armaufnahme 432 vermieden werden.

Optional hat die textile Armaufnahme 432 durch die Überlagerung der gekrümmten Querschnitte in den Ebenen quer und längs zum Arm die Form einer doppelt gekrümmten Fläche. Diese Form entspricht beispielsweise einem Ausschnitt der Außenfläche eines Hyperboloids. Ein Vorteil dieser Form ist es, dass der Arm in Längsrichtung auf der textilen Armaufnahme 432 abrollen kann und somit nicht an einer Kante der textilen Armaufnahme 432 eingeschnürt oder gedrückt wird.

Die Aufhängung der textilen Armaufnahme 432 an der Armschale 431 ermöglicht dem Anwender einen hohen Bewegungsumfang des Armes, ohne das es zu einer Behinderung oder verringertem Tragekomfort kommt.

Optional ist die Längserstreckung (in x-Richtung) der Befestigungsenden der Armschale 431 kleiner als die größte Längserstreckung (in x-Richtung) der Armaufnahme 432, insbesondere kleiner als 75%, kleiner als 65%, kleiner 50% der größten Längserstreckung (in x-Richtung) der Armaufnahme 432.

Exemplarisch besteht eine punktförmige Befestigung 436 der textilen Armaufnahme 432 an der Armschale 431, wodurch insbesondere eine Rotation des Armes gegenüber dem Unterstützungsabschnitt 3 ermöglicht wird.

Der Aufbau der Armschale 431 mit hängender textiler Armaufnahme 432 ermöglicht eine Anpassung an sich aufgrund An- und Entspannung der Oberarmmuskulatur variierende Oberarmdurchmesser und -form. Auf diese Weise wird eine funktionale Anbindung und Kraftübertragung zwischen Oberarm und Unterstützungsabschnitt 3 sowohl bei angespannten als auch bei entspannten Muskeln ermöglicht. Insbesondere kommt es zu keiner Reibung zwischen Oberarm und textiler Armaufnahme 432.

Die hängende Befestigung der textilen Armaufnahme 432 ersetzt eine Polsterung und ermöglicht eine Luftzirkulation unterhalb des Armes, daher kann mit dem Einsatz entsprechender Textilien auf diese Weise eine Wärme- und Feuchtigkeitsregulierung umgesetzt werden.

Das vorstehend erläuterte Exoskelett soll auch als Exoskelett gemäß einer ersten Ausführungsform bezeichnet werden.

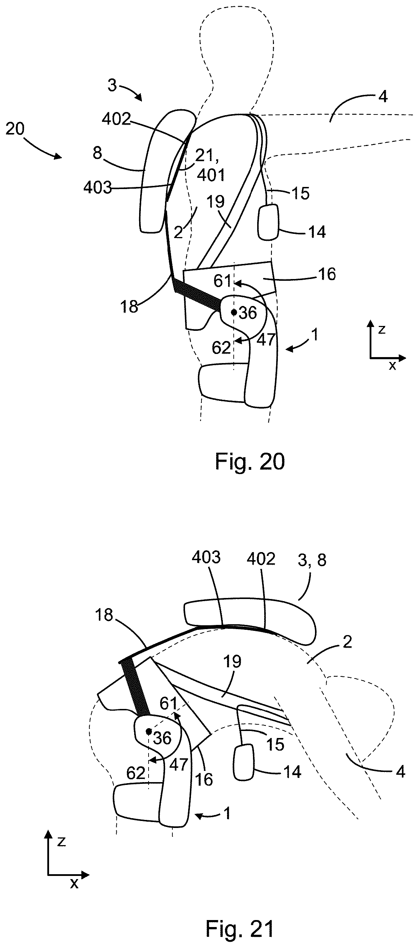

Die Figuren 20 und 21 zeigen ein Exoskelett 20 gemäß einer zweiten Ausführungsform. Bei diesem Exoskelett 20 dient der Basisabschnitt 1 zur Anbringung an ein Bein (oder beide Beine) des menschlichen Körpers und der Unterstützungsabschnitt 3 dient zur Unterstützung des Rückens des menschlichen Körpers. Zweckmäßigerweise ist das Exoskelett 20 gemäß dieser zweiten Ausführungsform (bis auf die nachfolgend erläuterten Unterschiede) wie das vorstehend erläuterte Exoskelett gemäß der ersten Ausführungsform ausgeführt, so dass die auf die erste Ausführungsform bezogenen Erläuterungen insoweit auch für die nachstehend erläuterte zweite Ausführungsform gelten.

Das Exoskelett 20 umfasst den Basisabschnitt 1 zur Anbringung an einen Körperabschnitt, und zwar ein Bein (oder beide Beine), des menschlichen Körpers. Der Basisabschnitt 1 kann auch als Bein-Basisabschnitt bezeichnet werden. Exemplarisch ist der Basisabschnitt 1 an einem oder beiden Beinen des Anwenders angebracht.

Das Exoskelett 20 umfasst ferner den beweglich mit dem Basisabschnitt 1 gekoppelten Unterstützungsabschnitt 3 zur Unterstützung eines Körperteils, und zwar des Rückens, des menschlichen Körpers. Das Exoskelett 20 umfasst die auf den Unterstützungsabschnitt 3 wirkende, insbesondere pneumatische, Aktoreinrichtung zur Bereitstellung einer Unterstützungskraft für den Körperteil, und zwar den Rücken. Der Unterstützungsabschnitt 3 kann auch als Rücken-Unterstützungsabschnitt bezeichnet werden.

Der Unterstützungsabschnitt 3 umfasst den Hauptabschnitt und das textile Tragesystem, mit dem der Unterstützungsabschnitt 3 an dem Körperteil, und zwar dem Rücken des menschlichen Körpers, anbringbar ist. Das Exoskelett 20 weist ferner eine Tragesystem-Befestigungsschnittstelle auf, mit der das textile Tragesystem lösbar an dem Hauptabschnitt befestigt ist.

Der Hauptabschnitt, das textile Tragesystem und/oder die Tragesystem-Befestigungsschnittstelle der zweiten Ausführungsform sind zweckmäßigerweise wie der vorstehend erläuterte Hauptabschnitt, das vorstehende erläuterte textile Tragesystem und die vorstehend erläuterte Tragesystem-Befestigungsschnittstelle der ersten Ausführungsform ausgeführt. Der Unterstützungsabschnitt 3 der zweiten Ausführungsform kann optional wie der im Zusammenhang mit der ersten Ausführungsform erläuterte Basisabschnitt (der insbesondere zur Anbringung an den Torso 2 dient) ausgeführt sein.

Der Unterstützungsabschnitt 3 ist exemplarisch um eine horizontale Schwenkachse 36 relativ zum Basisabschnitt 1 verschwenkbar gelagert. Exemplarisch befindet sich die horizontale Schwenkachse 36 (in einem Zustand, in dem der Anwender das Exoskelett 20 bestimmungsgemäß angelegt hat) auf der Höhe des Beckens oder der Hüfte des Anwenders, insbesondere dem Hüftgelenk des Anwenders. Bevorzugt ist die Aktoreinrichtung an der Schwenkachse 36 angeordnet - also vorzugsweise ebenfalls auf der Höhe des Beckens oder der Hüfte des Anwenders (im angelegten Zustand des Exoskeletts).

Der Schwenkwinkel des Unterstützungsabschnitts 3 um die horizontale Schwenkachse 36 relativ zum Basisabschnitt 1 soll als der Schwenkwinkel 47 bezeichnet werden. Der Schwenkwinkel 47 hat bei einem vertikal ausgerichteten Unterstützungsabschnitt 3 (bei einem vertikal ausgerichteten Exoskelett 20) einen Referenzwert, insbesondere einen Maximalwert, und sinkt bei einem nach vorne und unten gerichteten Verschwenken des Unterstützungsabschnitts 3 kontinuierlich bis zu einem Minimalwert ab. Der Maximalwert ist beispielsweise 180 Grad.

Exemplarisch ist der Schwenkwinkel 47 als Winkel zwischen einer Unterstützungsabschnitt-Achse 61 und einer Basisabschnitt-Achse 62 definiert. Die Unterstützungsabschnitt-Achse 61 verläuft in Längsrichtung des Unterstützungsabschnitts 3. In einem Zustand, in dem der Anwender das Exoskelett 20 angelegt hat und aufrecht steht, verläuft die Unterstützungsabschnitt-Achse 61 zweckmäßigerweise vertikal nach oben. Die Basisabschnitt-Achse 62 stellt zweckmäßigerweise eine vertikale Achse des Basisabschnitts 1 dar und verläuft vertikal nach unten, insbesondere bei einer vertikalen Ausrichtung des Basisabschnitts 1, beispielsweise in einem Zustand, in dem der Anwender das Exoskelett 20 angelegt hat und aufrecht steht. Der Schwenkwinkel 47 liegt exemplarisch in einer z-x-Ebene.

Der Unterstützungsabschnitt 3 umfasst den Hauptabschnitt und das textile Tragesystem, das insbesondere lösbar an dem Hauptabschnitt angebracht ist. Der Hauptabschnitt dient exemplarisch dazu, mittels des textilen Tragesystems an dem Rücken des menschlichen Körpers getragen zu werden, insbesondere rucksackartig. Der Unterstützungsabschnitt 3, insbesondere der Hauptabschnitt, umfasst das Rückenteil 8, das optional länglich ausgeführt ist und das optional mit seiner Längsachse vertikal und/oder in Längsrichtung des Rückens des Anwenders ausgerichtet ist. Optional erstreckt sich die Längsrichtung des Rückenteils 8 entlang der Längsrichtung des Rückens.

Der Hauptabschnitt umfasst ferner ein, insbesondere längliches und/oder steifes, Kraftübertragungselement 18, das sich von dem Rückenteil 8 nach unten hin zu dem Basisabschnitt 1 erstreckt, um das Rückenteil 8 mechanisch mit dem Basisabschnitt 1 zu koppeln. Das Kraftübertragungselement 18 dient zweckmäßigerweise dazu, ein von der Aktoreinrichtung an der Schwenkachse 36 bereitgestelltes Drehmoment (das zwischen dem Kraftübertragungselement 18 und dem Basisabschnitt 1 wirkt) zu dem Rückenteil 8 zu übertragen, um dadurch eine auf den Rücken des Anwenders wirkende Unterstützungskraft bereitzustellen. Exemplarisch ist das Rückenteil 8 schlauchförmig und/oder rucksackförmig ausgeführt. Das Rückenteil 8 ist insbesondere steif ausgeführt. Insbesondere umfasst das Rückenteil 8 ein zweckmäßigerweise steifes Rückenteil-Gehäuse, das beispielsweise aus einem insbesondere steifen Kunststoff und/oder als Hartschale gefertigt ist. Das Rückenteil 8 dient zweckmäßigerweise dazu, eine Kraft von dem Kraftübertragungselement 18 hin zu dem Rücken des Anwenders zu übertragen und/oder Komponenten für die Steuerung und/oder Bereitstellung der Unterstützungskraft aufzunehmen.

Das textile Tragesystem weist exemplarisch den Rückentextilabschnitt 401, insbesondere einen Rückennetzabschnitt, zur Anlage, insbesondere zumindest teilweisen Anlage, an dem Rücken des Anwenders des Exoskeletts 20 auf. In einem Zustand, in dem das Exoskelett 20 an einem Anwender angebracht ist und der Anwender eine aufrechte Körperhaltung einnimmt, ist der Rückentextilabschnitt 401 exemplarisch durch die Befestigung an dem Hauptabschnitt in eine Form versetzt, in der der Rückentextilabschnitt 401 mit einem oberen Bereich 402 des Rückentextilabschnitts 401 an einem oberen Rückenbereich des Anwenders anliegt und, ausgehend von dem oberen Bereich 402, diagonal nach unten vom Rücken des Anwenders abragt, so dass ein unterer Bereich 403 des Rückentextilabschnitts 401 vom Rücken des Anwenders beabstandet ist. Dies ist exemplarisch in der Figur 20 gezeigt.

In einem Zustand, in dem das Exoskelett 20 an dem Anwender angebracht ist und der Anwender eine nach vorne gebeugte Körperhaltung einnimmt, ist der Rückentextilabschnitt 401 exemplarisch durch die Befestigung an dem Hauptabschnitt ferner in eine Form versetzt, in der der Rückentextilabschnitt 401, der obere Bereich 402 und der untere Bereich 403 des Rückentextilabschnitts 401 am Rücken des Anwenders anliegen. Dies ist exemplarisch in der Figur 21 gezeigt.

## Patentansprüche

1. Exoskelett (20), umfassend:
- einen Basisabschnitt (1) zur Anbringung an einen Körperabschnitt, insbesondere den Torso (2), des menschlichen Körpers,
- einen beweglich mit dem Basisabschnitt (1) gekoppelten Unterstützungsabschnitt (3) zur Unterstützung eines Körperteils, vorzugsweise einer Gliedmaße, insbesondere eines Arms (4), des menschlichen Körpers,
- eine auf den Unterstützungsabschnitt (3) wirkende, insbesondere pneumatische, Aktoreinrichtung (5) zur Bereitstellung einer Unterstützungskraft für den Körperteil,
wobei der Basisabschnitt (1) einen Hauptabschnitt und ein textiles Tragesystem aufweist, mit dem der Basisabschnitt (1) an dem Körperabschnitt anbringbar ist, oder wobei der Unterstützungsabschnitt (3) einen Hauptabschnitt und ein textiles Tragesystem aufweist, mit dem der Unterstützungsabschnitt (3) an dem Körperteil, und zwar einem Rücken des menschlichen Körpers, anbringbar ist, und
wobei das Exoskelett (20) ferner eine Tragesystem-Befestigungsschnittstelle aufweist, mit der das textile Tragesystem lösbar an dem Hauptabschnitt befestigt ist, wobei das textile Tragesystem einen Rückentextilabschnitt (401), insbesondere einen Rückennetzabschnitt, zur Anlage, insbesondere zumindest teilweisen Anlage, an dem Rücken eines Anwenders des Exoskeletts (20) aufweist, wobei der Basisabschnitt (1) oder der Unterstützungsabschnitt (3) ein Rückenteil (8) umfasst und der Rückentextilabschnitt (401) zwischen einer oberen Befestigungsstelle (404) am Rückenteil (8) und einer unterhalb der oberen Befestigungsstelle (404) angeordneten unteren Befestigungsstelle (405) am Rückenteil (8) gespannt ist, so dass der Rückentextilabschnitt (401) zwischen der oberen Befestigungsstelle (404) und der unteren Befestigungsstelle (405) von dem Rückenteil (8) beabstandet ist.

2. Exoskelett (20) nach Anspruch 1, wobei der Rückentextilabschnitt (401) durch die Befestigung an dem Hauptabschnitt in eine Form versetzt ist, in der der Rückentextilabschnitt (401) in einem Zustand, in dem das Exoskelett (20) an einem Anwender angebracht ist und der Anwender eine aufrechte Körperhaltung einnimmt, mit einem oberen Bereich (402) des Rückentextilabschnitts (401) an einem oberen Rückenbereich des Anwenders anliegt und, ausgehend von dem oberen Bereich (402), diagonal nach unten vom Rücken des Anwenders abragt, so dass ein unterer Bereich (403) des Rückentextilabschnitts (401) vom Rücken des Anwenders beabstandet ist.

3. Exoskelett (20) nach Anspruch 2, wobei der Rückentextilabschnitt (401) durch die Befestigung an dem Hauptabschnitt in eine Form versetzt ist, in der der Rückentextilabschnitt (401) in einem Zustand, in dem das Exoskelett (20) an dem Anwender angebracht ist und der Anwender eine nach vorne gebeugte Körperhaltung einnimmt, der obere Bereich (402) und der untere Bereich (403) des Rückentextilabschnitts (401) am Rücken des Anwenders anliegen.

4. Exoskelett (20) nach einem voranstehenden Anspruch, wobei der Rückentextilabschnitt (401) derart an dem Hauptabschnitt befestigt ist, dass der Hauptabschnitt in seiner Länge einstellbar, insbesondere an eine Oberkörpergröße des Anwenders anpassbar ist, insbesondere ohne Abnahme des Rückentextilabschnitts (401) vom Hauptabschnitt.

5. Exoskelett (20) nach einem voranstehenden Anspruch, wobei die Länge des Rückentextilabschnitts (401) an eine Oberkörpergröße des Anwenders anpassbar ist, insbesondere indem ein Abstand zwischen einer/der oberen Befestigungsstelle (404), an der der Rückentextilabschnitt (401) am Hauptabschnitt befestigt ist und einer/der unteren Befestigungsstelle (405), an der der Rückentextilabschnitt (401) am Hauptabschnitt befestigt ist, verstellbar ist, insbesondere durch eine Anpassung der Länge des Hauptabschnitts.

6. Exoskelett (20) nach einem voranstehenden Anspruch, wobei das textile Tragesystem einen Schultergurtabschnitt und/oder einen Beckengurtabschnitt aufweist.

7. Exoskelett (20) nach einem voranstehenden Anspruch wobei die Befestigungsschnittstelle eine Sicherheits-Befestigungseinrichtung (406) umfasst, über die das textile Tragesystem an dem Hauptabschnitt befestigt ist, wobei zum Lösen der Sicherheits-Befestigungseinrichtung (406) wenigstens zwei aufeinanderfolgende, sich voneinander unterscheidende Löse-Betätigungen der Sicherheits-Befestigungseinrichtung (406) erforderlich sind.

8. Exoskelett (20) nach Anspruch 7, wobei die Sicherheits-Befestigungseinrichtung (406) über eine Laschenaufnahme (407), eine in die Laschenaufnahme (407) eingesetzte Befestigungslasche (408) und einen in die Befestigungslasche (408) eingesetzten Befestigungsbolzen (409) verfügt, wobei zum Lösen der Sicherheits-Befestigungseinrichtung (406) als erste Löse-Betätigung ein Herausziehen des Befestigungsbolzens (409) aus der Befestigungslasche (408) und als zweite Löse-Betätigung ein Herausziehen der Befestigungslasche (408) aus der Laschenaufnahme (407) erforderlich ist, und/oder wobei zum Schließen der Sicherheits-Befestigungseinrichtung (406) eine SchließBetätigung erforderlich ist, bei der die Befestigungslasche (408) in die Laschenaufnahme (407) geschoben wird und sich dadurch der Befestigungsbolzen (409) automatisch in die Befestigungslasche (408) bewegt.

9. Exoskelett (20) nach einem voranstehenden Anspruch, wobei die Befestigungsschnittstelle eine Zusatz-Befestigungseinrichtung mit einem Haken (410) und/oder einem Hebelverschluss aufweist.

10. Exoskelett (20) nach einem voranstehenden Anspruch, wobei die Befestigungsschnittstelle über eine GelenkBefestigungseinrichtung verfügt, die über einen ersten, dem textilen Tragesystem zugehörigen Gelenkabschnitt (305), und über einen zweiten, dem Hauptabschnitt zugehörigen Gelenkabschnitt (306) verfügt, wobei der erste Gelenkabschnitt (305) und der zweite Gelenkabschnitt (306) ein Gelenk (17) zwischen dem textilen Tragesystem und dem Hauptabschnitt bilden und der erste Gelenkabschnitt (305) vom zweiten Gelenkabschnitt (306) abnehmbar ist, um die GelenkBefestigungseinrichtung zu lösen.

11. Exoskelett nach Anspruch 10, wobei die GelenkBefestigungseinrichtung über ein Betätigungselement (313), insbesondere einen Betätigungshebel, verfügt, über dessen Betätigung der erste Gelenkabschnitt (305) von dem zweiten Gelenkabschnitt (306) abnehmbar ist.

12. Anordnung (60), umfassend ein Exoskelett (20) nach einem der voranstehenden Ansprüche, wobei das textile Tragesystem ein erstes textiles Tragesystem ist, ferner umfassend ein zweites textiles Tragesystem (412), wobei das erste textile Tragesystem durch das zweite textile Tragesystem (412) austauschbar ist.

13. Anordnung (60) nach Anspruch 12, wobei sich das zweite textile Tragesystem (412) von dem ersten textilen Tragesystem unterscheidet, insbesondere in seiner Größe und/oder Polsterung und/oder Material.

14. Verfahren zum Betreiben eines Exoskeletts (20) nach einem der Ansprüche 1 bis 11, umfassend den Schritt:
- Lösen des textilen Tragesystems von dem Hauptabschnitt.

15. Verfahren zum Betreiben einer Anordnung (60) nach Anspruch 12 oder 13, umfassend die Schritte:
- Abnehmen des ersten textilen Tragesystems von dem Hauptabschnitt,
- Anbringen des zweiten textilen Tragesystems (412) an den Hauptabschnitt.

## Claims

1. Exoskeleton (20), comprising:
- a base section (1) for attachment to a body section, in particular the torso (2), of the human body,
- a support section (3) movably coupled to the base section (1) for supporting a body part, preferably a limb, in particular an arm (4), of the human body,
- an actuator device (5), in particular a pneumatic actuator device, acting on the support section (3) for providing a support force for the body part,
wherein the base section (1) comprises a main section and a textile carrying system with which the base section (1) is attachable to the body section, or wherein the support section (3) comprises a main section and a textile carrying system with which the support section (3) is attachable to the body section, namely a back of the human body, and
wherein the exoskeleton (20) further comprises a carrying system attachment interface with which the textile carrying system is releasably attached to the main section, wherein the textile carrying system has a back textile section (401), in particular a back mesh section, for abutment, in particular at least partial abutment, against the back of a user of the exoskeleton (20), wherein the base section (1) or the support section (3) comprises a back part (8) and the back textile section (401) is stretched between an upper attachment point (404) on the back part (8) and a lower attachment point (405) on the back part (8) arranged below the upper attachment point (404), such that the back textile section (401) is spaced from the back part (8) between the upper attachment point (404) and the lower attachment point (405).

2. Exoskeleton (20) according to claim 1, wherein the back textile section (401) is formed by the attachment to the main section into a shape in which, in a state in which the exoskeleton (20) is attached to a user and the user assumes an upright posture, the back textile section (401) abuts with an upper region (402) of the back textile section (401) on an upper back region of the user and, starting from the upper region (402), projects diagonally downwardly away from the user's back so that a lower region (403) of the back textile section (401) is spaced from the user's back.

3. Exoskeleton (20) according to claim 2, wherein the back textile section (401) is formed by the attachment to the main section into a shape in which, in a state in which the exoskeleton (20) is attached to the user and the user assumes a forwardly bent posture, the upper region (402) and the lower region (403) of the back textile section (401) abut on the user's back.

4. Exoskeleton (20) according to a preceding claim, wherein the back textile section (401) is attached to the main section in such a way that the main section is adjustable in length, in particular adaptable to an upper body size of the user, in particular without removing the back textile section (401) from the main section.

5. Exoskeleton (20) according to a preceding claim, wherein the length of the back textile section (401) is adjustable to an upper body size of the user, in particular by adjusting a distance between a/the upper attachment point (404) to which the back textile section (401) is attached to the main section and a/the lower attachment point (405) to which the back textile section (401) is attached to the main section, in particular by adjusting the length of the main section.

6. Exoskeleton (20) according to a preceding claim, wherein the textile carrying system comprises a shoulder strap section and/or a pelvic strap section.

7. Exoskeleton (20) according to a preceding claim wherein the attachment interface comprises a safety fastening device (406) via which the textile carrying system is attached to the main section, wherein at least two successive, mutually different release actuations of the safety fastening device (406) are required to release the safety fastening device (406) .

8. Exoskeleton (20) according to claim 7, wherein the safety fastening device (406) has a tab receptacle (407), a fastening tab (408) inserted into the tab receptacle (407) and a fastening bolt (409) inserted into the fastening tab (408), wherein, in order to release the safety fastening device (406), as the first release actuation, a pulling of the fastening bolt (409) out of the fastening tab (408) and, as the second release actuation, a pulling of the fastening tab (408) out of the tab receptacle (407) is required and/or wherein a closing actuation is required to close the safety fastening device (406), in which closing actuation the fastening tab (408) is pushed into the tab receptacle (407) and the fastening bolt (409) thereby automatically moves into the fastening tab (408).

9. Exoskeleton (20) according to a preceding claim, wherein the attachment interface comprises an additional fastening device with a hook (410) and/or a lever lock.

10. Exoskeleton (20) according to any preceding claim, wherein the attachment interface comprises a joint fastening device comprising a first joint section (305) belonging to the textile carrying system and a second joint section (306) belonging to the main section, wherein the first joint section (305) and the second joint section (306) form a joint (17) between the textile carrying system and the main section, and the first joint section (305) is detachable from the second joint section (306) to release the joint fastening device.

11. Exoskeleton according to claim 10, wherein the joint fastening device has an actuating element (313), in particular an actuating lever, and the first joint section (305) is detachable from the second joint section (306) via an actuation of the actuating element (313).

12. Arrangement (60), comprising an exoskeleton (20) according to one of the preceding claims, wherein the textile carrying system is a first textile carrying system, further comprising a second textile carrying system (412), wherein the first textile carrying system is interchangeable with the second textile carrying system (412).

13. Arrangement (60) according to claim 12, wherein the second textile carrying system (412) differs from the first textile carrying system, in particular in its size and/or padding and/or material.

14. A method of operating an exoskeleton (20) according to any one of claims 1 to 11, comprising the step of:
- detaching the textile carrying system from the main section.

15. A method of operating an arrangement (60) according to claim 12 or 13, comprising the steps of:
- removing the first textile carrying system from the main section,
- attaching the second textile carrying system (412) to the main section.

## Revendications

1. Exosquelette (20), comprenant :
- une section de base (1) destinée à être installée sur une partie du corps, en particulier le torse (2), du corps humain,
- une section de soutien (3) couplée de manière mobile à la section de base (1) pour soutenir une partie du corps, de préférence un membre, en particulier un bras (4), du corps humain,
- un dispositif d'actionnement (5), en particulier pneumatique, agissant sur la section de soutien (3), destiné à fournir une force de soutien pour la partie du corps,
dans lequel la section de base (1) présente une section principale et un système de support textile avec lequel la section de base (1) peut être installée sur la partie du corps, ou dans lequel la section de soutien (3) présente une section principale et un système de support textile avec lequel la section de soutien (3) peut être installée sur la partie du corps, à savoir un dos du corps humain, et
dans lequel l'exosquelette (20) présente en outre une interface de fixation de système de support, par laquelle le système de support textile est fixé de manière amovible sur la section principale, dans lequel le système de support textile présente une section textile dorsale (401), en particulier une section de filet dorsal, destinée à venir en appui, en particulier au moins en partie, sur le dos d'un utilisateur de l'exosquelette (20), dans lequel la section de base (1) ou la section de soutien (3) comprend une partie dorsale (8) et la section textile dorsale (401) est tendue entre un point de fixation supérieur (404) sur la partie dorsale (8) et un point de fixation inférieur (405) disposé en dessous du point de fixation supérieur (404) sur la partie dorsale (8) de telle sorte que la section textile dorsale (401) est éloignée de la partie dorsale (8) entre le point de fixation supérieur (404) et le point de fixation inférieur (405).

2. Exosquelette (20) selon la revendication 1, dans lequel la section textile arrière (401) est fixée à la section principale dans une forme dans laquelle la section textile arrière (401), dans un état dans lequel l'exosquelette (20) est fixé à un utilisateur et l'utilisateur adopte une posture droite, repose avec une région supérieure (402) de la section textile arrière (401) contre une région supérieure du dos de l'utilisateur et, à partir de la région supérieure (402), fait saillie en diagonale vers le bas à partir du dos de l'utilisateur, de sorte qu'une région inférieure (403) de la section textile arrière (401) est espacée du dos de l'utilisateur..

3. Exosquelette (20) selon la revendication 2, dans lequel la section textile dorsale (401) est amenée, du fait de la fixation sur la section principale, dans une forme dans laquelle la section textile dorsale (401), la région supérieure (402) et la région inférieure (403) de la section textile dorsale (401) reposent sur le dos de l'utilisateur, dans un état dans lequel l'exosquelette (20) est installé sur l'utilisateur et l'utilisateur adopte une posture penchée vers l'avant.

4. Exosquelette (20) selon une revendication précédente, dans lequel la section textile dorsale (401) est fixée sur la section principale de telle manière que la section principale peut être réglée en longueur, en particulier peut être adaptée à une taille de buste de l'utilisateur, en particulier sans retirer la section textile dorsale (401) de la section principale.

5. Exosquelette (20) selon une revendication précédente, dans lequel la longueur de la section textile dorsale (401) peut être adaptée à une taille de buste de l'utilisateur, en particulier en ajustant une distance entre un/le point de fixation supérieur (404), sur lequel la section textile dorsale (401) est fixée sur la section principale, et un/le point de fixation inférieur (405), sur lequel la section textile dorsale (401) est fixée sur la section principale, en particulier en adaptant la longueur de la section principale.

6. Exosquelette (20) selon une revendication précédente, dans lequel le système de support textile présente une section de sangle d'épaule et/ou une section de sangle de bassin.

7. Exosquelette (20) selon une revendication précédente, dans lequel l'interface de fixation comprend un dispositif de fixation de sécurité (406) par l'intermédiaire duquel le système de support textile est fixé sur la section principale, dans lequel au moins deux actionnements de desserrage consécutifs et distincts du dispositif de fixation de sécurité (406) sont nécessaires pour desserrer le dispositif de fixation de sécurité (406).

8. Exosquelette (20) selon la revendication 7, dans lequel le dispositif de fixation de sécurité (406) dispose d'un logement de patte (407), d'une patte de fixation (408) insérée dans le logement de patte (407) et d'un boulon de fixation (409) inséré dans la patte de fixation (408), dans lequel, pour desserrer le dispositif de fixation de sécurité (406), un premier actionnement de desserrage consiste à extraire le boulon de fixation (409) de la patte de fixation (408) et un deuxième actionnement de desserrage, consiste à extraire la patte de fixation (408) du logement de patte (407), et/ou dans lequel, pour fermer le dispositif de fixation de sécurité (406), un actionnement de fermeture est nécessaire, au cours duquel la patte de fixation (408) est poussée dans le logement de patte (407), et le boulon de fixation (409) se déplace ainsi automatiquement dans la patte de fixation (408).

9. Exosquelette (20) selon une revendication précédente, dans lequel l'interface de fixation présente un dispositif de fixation supplémentaire avec un crochet (410) et/ou une fermeture à levier.

10. Exosquelette (20) selon une revendication précédente, dans lequel l'interface de fixation dispose d'un dispositif de fixation d'articulation qui dispose d'une première section d'articulation (305) associée au système de support textile et d'une deuxième section d'articulation (306) associée à la section principale, dans lequel la première section d'articulation (305) et la deuxième section d'articulation (306) forment une articulation (17) entre le système de support textile et la section principale et la première section d'articulation (305) peut être retirée de la deuxième section d'articulation (306) pour desserrer le dispositif de fixation d'articulation.

11. Exosquelette selon la revendication 10, dans lequel le dispositif de fixation d'articulation dispose d'un élément d'actionnement (313), en particulier d'un levier d'actionnement, dont l'actionnement permet de retirer la première section d'articulation (305) de la deuxième section d'articulation (306).

12. Ensemble (60) comprenant un exosquelette (20) selon l'une quelconque des revendications précédentes, dans lequel le système de support textile est un premier système de support textile, comprenant en outre un deuxième système de support textile (412), dans lequel le premier système de support textile peut être remplacé par le deuxième système de support textile (412).

13. Ensemble (60) selon la revendication 12, dans lequel le deuxième système de support textile (412) se distingue du premier système de support textile, en particulier par sa taille et/ou son rembourrage et/ou son matériau.

14. Procédé pour faire fonctionner un exosquelette (20) selon l'une quelconque des revendications 1 à 11, comprenant l'étape :
- de desserrage du système de support textile de la section principale.

15. Procédé pour faire fonctionner un ensemble (60) selon la revendication 12 ou 13, comprenant les étapes :
- de retrait du premier système de support textile de la section principale,
- d'installation du deuxième système de support textile (412) sur la section principale.
